# EUROPEAN PATENT APPLICATION

(11) **EP 4 533 932 A1**
(43) Date of publication of application: **09.04.2025**
(21) Application number: 23823668.1
(22) Date of filing: 26.05.2023
(51) Int. Cl.: A01B 69/00, H04N 7/18

(54) **VIDEO DISPLAY SYSTEM AND WORK VEHICLE**

(30) Priority: 16.06.2022 JP 2022097599; 16.06.2022 JP 2022097600
(71) Applicant: Kubota Corporation, Osaka 556-8601 (JP)
(72) Inventor: FUJII, Takafumi, Sakai-shi, Osaka 590-0908 (JP); MATSUZAKI, Yushi, Sakai-shi, Osaka 590-0908 (JP); TOKIEDA, Yoshiki, Sakai-shi, Osaka 590-0908 (JP)
(74) Representative: Cabinet Beau de Loménie
(86) International application number: PCT/JP2023/019734
(87) International publication number: WO 2023/243369

(57) **Abstract**

A video display system includes an image capture device attached to a work vehicle to which an implement is connected and configured to generate data of time-series images by performing imaging in a travel direction of the work vehicle, a screen, and a control device configured to display, on the screen, a video based on the data of the time-series images. The control device is configured to, when the implement is connected to the work vehicle on the opposite side of the work vehicle from the travel direction, display, on the screen, a superimposed video in which a path for the implement is superimposed on the video.

## Description

### TECHNICAL FIELD

The present disclosure relates to video display systems and work vehicles.

### BACKGROUND ART

Research and development has been directed to the automation of agricultural machines that are used in agricultural fields. For example, work vehicles such as tractors, combines, and rice transplanters which automatically travel within fields by utilizing a positioning system, e.g., a global navigation satellite system (GNSS), have been put into practical use. Research and development are also underway for work vehicles that automatically travel inside as well as outside fields. Technologies for remotely operating agricultural machines have also been being developed.

Patent Documents 1 and 2 each disclose an example of a system that allows an unmanned work vehicle to automatically travel between two fields separated from each other with a road interposed therebetween. Patent Document 3 discloses an example of a device that remotely operates a work vehicle that travels autonomously.

### CITATION LIST

### PATENT LITERATURE

Patent Document 1: Japanese Laid-Open Patent Publication No. 2021-073602
Patent Document 2: Japanese Laid-Open Patent Publication No. 2021-029218
Patent Document 3: International Publication WO2016/017367

### SUMMARY OF INVENTION

### TECHNICAL PROBLEM

The present disclosure provides a technique for displaying, on a screen, a superimposed video in which an image showing at least one of a path for an implement and a work trace after ground work of the implement, in the travel direction of a work vehicle, is superimposed on a video.

### SOLUTION TO PROBLEM

A video display system according to an embodiment of the present disclosure includes an image capture device attached to a work vehicle to which an implement is connected, and configured to generate data of time-series images by performing imaging in a travel direction of the work vehicle, a screen, and a control device configured to display, on the screen, a video based on the data of the time-series images. The control device is configured to, when the implement is connected to the work vehicle on the opposite side of the work vehicle from the travel direction, display, on the screen, a superimposed video in which a path for the implement is superimposed on the video.

An agricultural machine according to an embodiment of the present disclosure includes a work vehicle, an implement, and the above video display system.

A video display system according to another embodiment of the present disclosure includes an image capture device attached to a work vehicle to which an implement is connected and configured to generate data of time-series images by performing imaging in a travel direction of the work vehicle, a screen, and a control device configured to display, on the screen, a video based on the data of the time-series images. The control device is configured to display, on the screen, a superimposed video in which an image showing a work trace after ground work in the travel direction predicted when the work vehicle with the implement connected thereto is traveling is superimposed on the video.

An agricultural machine according to another embodiment of the present disclosure includes a work vehicle, an implement, and the above video display system.

General or specific aspects of the present disclosure may be implemented using devices, systems, methods, integrated circuits, computer programs, non-transitory computer-readable storage media, or any combination thereof. The computer-readable storage media may include volatile and non-volatile storage media. The device may be constituted by a plurality of devices. In the case in which the device is constituted by two or more devices, the two or more devices may be provided in a single apparatus, or separately provided in two or more different apparatuses.

### ADVANTAGEOUS EFFECTS OF INVENTION

According to the embodiment of the present disclosure, a superimposed video in which an image showing at least one of a path for an implement and a work trace after ground work of the implement, in the travel direction of a work vehicle, is superimposed on a video, can be displayed on a screen.

### BRIEF DESCRIPTION OF DRAWINGS

FIG. **1A** is a diagram illustrating an example configuration of an agricultural management system.
FIG. **1B** is a diagram illustrating another example configuration of an agricultural management system.
FIG. **2** is a side view schematically illustrating an example of a work vehicle and an example of an implement that is connected to the work vehicle.
FIG. **3** is a block diagram illustrating an example configuration of a work vehicle and an implement.
FIG. **4** is a conceptual diagram illustrating an example of a work vehicle that performs positioning based on RTK-GNSS.
FIG. **5** is a diagram illustrating an example of an operation terminal and an example of operation switches disposed in a cabin.
FIG. **6** is a block diagram illustrating hardware configurations of a management device and a remote device.
FIG. **7** is a diagram schematically illustrating an example of a work vehicle that automatically travels along a target path in a field.
FIG. **8** is a flowchart illustrating an example operation of steering control during automated driving.
FIG. **9A** is a diagram illustrating an example of a work vehicle that travels along a target path **P.**
FIG. **9B** is a diagram illustrating an example of a work vehicle that is located at a position away from and to the right of a target path **P.**
FIG. **9C** is a diagram illustrating an example of a work vehicle that is located at a position away from and to the left of a target path **P.**
FIG. **9D** is a diagram illustrating an example of a work vehicle that faces in a direction tilted with respect to a target path **P.**
FIG. **10** is a diagram schematically illustrating an example of a situation in which a plurality of work vehicles are automatically traveling in a field and on a road outside fields.
FIG. **11** is a diagram illustrating an example of a display screen in an automatic traveling mode.
FIG. **12A** is a diagram schematically illustrating an example of a video showing an area in front of a work vehicle, which is displayed on a screen.
FIG. **12B** is a diagram schematically illustrating an example of a superimposed video in which a path for an implement in the travel direction of a work vehicle is superimposed on a video.
FIG. **13** is a diagram schematically illustrating a positional relationship between a reference point in a local coordinate system of a work vehicle and the positions of both end portions of an implement.
FIG. **14** is a diagram schematically illustrating an example of a superimposed video in which paths for an implement and paths for a pair of rear wheels are superimposed on a video.
FIG. **15** is a diagram schematically illustrating an example of a superimposed video in which paths for an implement and a target line along a target path are superimposed on a video.
FIG. **16** is a schematic diagram for describing the amount of a deviation of predicted paths for an implement from reference paths.
FIG. **17** is a diagram schematically illustrating an example of a superimposed video including a warning indication that is displayed on a screen when a deviation amount is not less than a threshold.
FIG. **18** is a diagram schematically illustrating a positional relationship between a reference point in a local coordinate system of a work vehicle, and the position of one side portion of an implement installed off-center.
FIG. **19** is a diagram schematically illustrating an example of a superimposed video in which a path for an off-center implement is superimposed on a video.
FIG. **20** is a diagram schematically illustrating an example of a video showing that there is a footbridge grade-separated from a road outside fields in the travel direction of a work vehicle traveling on the road.
FIG. **21** is a schematic diagram illustrating an example configuration of a HUD unit.
FIG. **22** is a diagram schematically illustrating an example of a superimposed video in which a work trace after ground work in the travel direction is superimposed on a video.
FIG. **23** is a diagram schematically illustrating another example of a superimposed video in which a work trace after ground work in the travel direction is superimposed on a video.
FIG. **24** is a diagram schematically illustrating a superimposed video in which a work trace after ground work and a target line are superimposed on a video.
FIG. **25** is a diagram schematically illustrating an example of a superimposed video including a guidance indication that guides a user, indicating that the work prediction line should coincide with the guidance line.
FIG. **26** is a diagram schematically illustrating an example of a superimposed video including a warning indication warning that a work prediction line does not coincide with a guidance line.
FIG. **27** is a diagram schematically illustrating an example of a superimposed video including a guidance indication that prompts a user to change a target path.
FIG. **28** is a diagram schematically illustrating an example of a superimposed video including an indication of a turning site located in the travel direction of a work vehicle.

### DESCRIPTION OF EMBODIMENTS

### Definition of terms

As used herein, the term "agricultural machine" refers to a machine that is used in agricultural applications. Examples of agricultural machines include tractors, harvesters, rice transplanters, vehicles for crop management, vegetable transplanters, mowers, seeders, spreaders, agricultural drones (i.e., unmanned aerial vehicles: UAVs), and mobile robots for agriculture. Not only may a work vehicle (such as a tractor) alone serve as an "agricultural machine," but also a work vehicle combined with an implement attached to or towed by the work vehicle may serve as a single "agricultural machine." The agricultural machine performs agricultural work such as tillage, seeding, pest controlling, manure spreading, crop planting, or harvesting on the ground surface within fields. Such types of agricultural work are in some cases referred to as "ground work" or simply as "work." The traveling of a vehicle-type agricultural machine while performing agricultural work is in some cases referred to as "work-traveling."

The term "automated driving" means controlling the movement of an agricultural machine under the control of a control device, without manual operations performed by the driver. An agricultural machine that performs automated driving is in some cases referred to as an "automated-driving agricultural machine" or "robot agricultural machine." During automated driving, not only the movement of an agricultural machine but also agricultural work operations (e.g., operations of an implement) may be automatically controlled. In the case in which an agricultural machine is a vehicle-type machine, the traveling of the agricultural machine by automated driving is referred to as "automatic traveling." The control device may control at least one of steering required for the movement of an agricultural machine, adjustment of movement speed, and starting and stopping of movement. When controlling a work vehicle with an implement attached thereto, the control device may control operations such as raising and lowering of the implement, and starting and stopping of the operation of the implement. Movement by automated driving may include not only the movement of an agricultural machine along a predetermined path toward a destination, but also the movement of an agricultural machine to follow a tracked target. An agricultural machine that performs automated driving may move partially based on the user's instructions. An agricultural machine that performs automated driving may operate in an automated driving mode as well as a manual driving mode in which the agricultural machine moves according to the driver's manual operations. Steering of an agricultural machine that is not manually performed and is instead performed under the control of the control device is referred to as "automatic steering." All or a portion of the control device may be provided external to the agricultural machine. Control signals, commands, data, and the like may be exchanged by communication between the agricultural machine and the control device external to the agricultural machine. An agricultural machine that performs automated driving may move autonomously while sensing a surrounding environment without any human being involved with control of the movement of the agricultural machine. An agricultural machine capable of moving autonomously can perform unmanned traveling inside fields or outside fields (e.g., on roads). Such an agricultural machine may detect and avoid obstacles during autonomous movement.

The term "remote operation" or "remote maneuver" refers to operating an agricultural machine using a remote operation device. Remote operation may be performed by an operator (e.g., a system manager or a user of an agricultural machine) who is located away from an agricultural machine. The term "remotely-operated traveling" means that an agricultural machine travels in response to a signal transmitted from a remote operation device. The remote operation device may be inclusive of devices having a signal transmission function such as personal computers (PCs), laptop computers, tablet computers, smartphones, or remote controls. The operator can give an agricultural machine a command to start, stop, accelerate, decelerate, change travel direction, or the like by operating the remote operation device. The mode in which the control device controls the traveling of an agricultural machine in response to these commands is referred to as a "remote operation mode".

The term "remote device" refers to a device that is located away from an agricultural machine, and has a communication function. Remote devices may, for example, be a remote operation device that is used by an operator to remotely maneuver an agricultural machine. The remote device may include a display device (display) or may be connected to a display device. The display device can display an image (or video) obtained by visualizing a state of surroundings of an agricultural machine based on sensor data (also referred to as "sensing data") output from a sensing device such as a camera or LiDAR sensor included in the agricultural machine. The operator can recognize the state of surroundings of the agricultural machine and remotely maneuver the agricultural machine by operating the remote operation device if necessary while viewing the displayed image.

The term "work plan" refers to data that specifies a plan for performing one or more types of agricultural work using agricultural machines. The work plan may, for example, include information indicating the order of the types of agricultural work to be performed by agricultural machines and a field in which each type of agricultural work is to be performed. The work plan may include information indicating the date and time when each type of agricultural work is to be performed. In particular, the work plan including information indicating the date and time when each type of agricultural work is to be performed is referred to as a "work schedule" or simply as a "schedule." The work schedule may include information indicating the time when each type of agricultural work is to be started and/or the time when each type of agricultural work is to be ended on each working day. The work plan or work schedule may include information indicating, for each type of agricultural work, the contents of the work, an implement to be used, and/or the type and amount of an agricultural material to be used. As used herein, the term "agricultural material" refers to a material that is used in agricultural work performed by an agricultural machine. The agricultural material may also be simply referred to as a "material." The agricultural material may be inclusive of materials consumed by agricultural work such as agricultural chemicals, fertilizers, seeds, or seedlings. The work plan may be created by a processing device that communicates with an agricultural machine to manage agricultural work, or a processing device mounted on an agricultural machine. The processing device can, for example, create a work plan based on information input by a user (agricultural business manager, agricultural worker, etc.) operating a terminal device. As used herein, the processing device that communicates with an agricultural machine to manage agricultural work is referred to as a "management device." The management device may manage agricultural work of a plurality of agricultural machines. In that case, the management device may create a work plan including information about each type of agricultural work to be performed by each of the plurality of agricultural machines. The work plan may be downloaded to each agricultural machine and stored in a storage device. In order to perform scheduled agricultural work in accordance with the work plan, each agricultural machine can automatically move to a field and perform the agricultural work.

The term "environmental map" refers to data representing a position or area of an object existing in an environment where an agricultural machine moves, using a predetermined coordinate system. The environmental map may be simply referred to as a "map" or "map data." A coordinate system that is used to specify an environmental map may, for example, be a world coordinate system such as a geographic coordinate system fixed to the earth. The environmental map may contain, in addition to positions, other information (e.g., attribute information and other information) about objects existing in an environment. The environmental map includes various types of maps such as point cloud maps and grid maps. Data of a local map or partial map created or processed during a process of producing an environmental map is also referred to as a "map" or "map data."

The term "agricultural road" means a road that is used mainly for agriculture. The agricultural road is not limited to a road paved with asphalt, and is inclusive of unpaved roads covered with soil, gravel or the like. The agricultural road is inclusive of roads (including private roads) on which only vehicle-type agricultural machines (e.g., work vehicles such as tractors) are allowed to travel, and roads on which general vehicles (cars, trucks, buses, etc.) are also allowed to travel. Work vehicles may automatically travel on general roads in addition to agricultural roads. The term "general road" refers to a road maintained for traffic of general vehicles.

### Embodiments

Embodiments of the present disclosure will be described below. To avoid unnecessarily obscuring the present disclosure, well-known features may not be described or substantially the same elements may not be redundantly described, for example. This is for ease of understanding the present disclosure. The present inventor provides the accompanying drawings and the following description to allow a person skilled in the art to thoroughly understand the present disclosure. These are not intended to limit the subject matter as set forth in the appended claims. In the description that follows, like elements are indicated by like reference signs.

The following embodiments are illustrative, and techniques according to the present disclosure are not limited thereto. For example, numerical values, shapes, materials, steps, and the order of the steps, etc., indicated in the following embodiments are merely illustrative, and various modifications can be made thereto unless a technical contradiction occurs. The embodiments can be used in various combinations unless a technical contradiction occurs.

An embodiment in which the techniques according to the present disclosure are applied to a work vehicle such as a tractor, which is an example of an agricultural machine, will be mainly described below. The techniques according to the present disclosure are applicable to not only tractors but also other agricultural machines (e.g., rice transplanters, combines, harvesters, vehicles for crop management, vegetable transplanters, mowers, seeders, spreaders, agricultural drones, and mobile robots for agriculture), and particularly suitably applicable to agricultural machines that can perform remotely-operated traveling. As an example, an embodiment in which a work vehicle is provided with a travel control system for implementing an automatic traveling function and a remote operation function will be described below. It should be noted that the techniques according to the present disclosure doe not necessarily require the automatic travel function and the remote operation function. At least a portion of the functions of the travel control system may be implemented in other devices that communicate with the work vehicle (e.g., a remote device for remote maneuver, or a server).

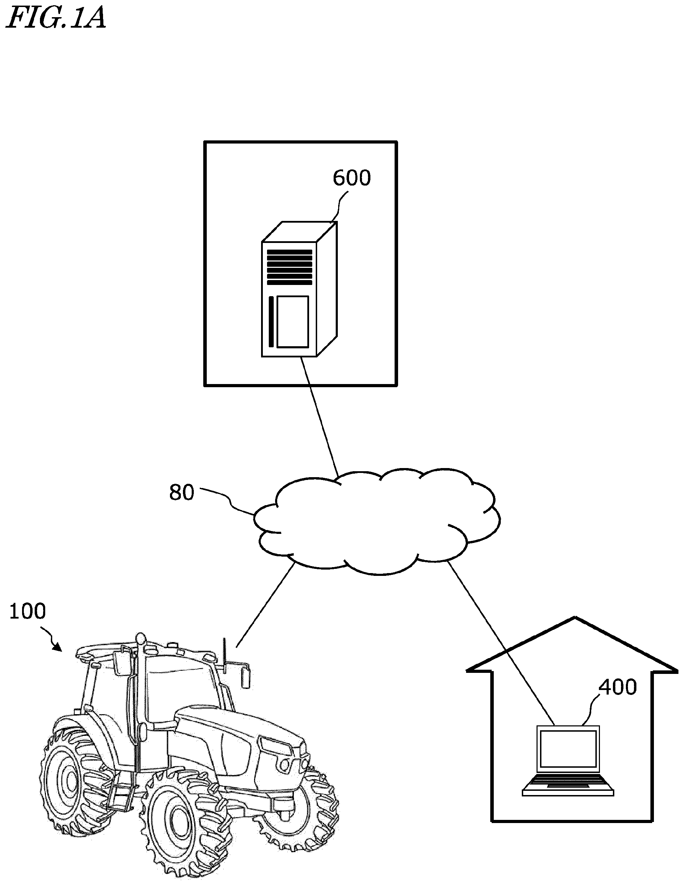

FIG. **1A** is a diagram for an overview of an agriculture management system according to an illustrative embodiment of the present disclosure. The agriculture management system illustrated in FIG. **1A** includes a work vehicle **100,** a remote device **400,** and a management device **600.** The remote device **400** is a computer used by a user who remotely monitors the work vehicle **100.** The management device **600** is a computer managed by an entity running the agricultural management system. The work vehicle **100,** the remote device **400,** and the management device **600** can communicate with each other through a network **80.** Although FIG. **1A** illustrates a single work vehicle **100,** the agricultural management system may include a plurality of work vehicles or other agricultural machines. The agriculture management system according to this embodiment of the present disclosure includes a remote maneuver system for the work vehicle **100.** The remote maneuver system includes a sensing device, communication device, and control device of the work vehicle **100,** and the remote device **400.** A portion of the entire remove maneuver system according to this embodiment of the present disclosure that includes the sensing device and communication device of the work vehicle **100** is in some cases referred to as a "sensing system." Thus, the sensing system is a portion of the remote maneuver system.

In this embodiment of the present disclosure, the work vehicle **100** is a tractor. An implement can be attached to one or both of rear and front portions of the work vehicle **100.** The work vehicle **100** can travel in a field while performing agricultural work corresponding to the type of the implement.

In this embodiment of the present disclosure, the work vehicle **100** has an automated driving function. Specifically, the work vehicle **100** can travel under the control of the control device without manual operations. In this embodiment of the present disclosure, the control device is provided in the work vehicle **100,** and can control both the speed and steering of the work vehicle **100.** The work vehicle **100** can automatically travel not only inside fields but also outside fields (e.g., roads). The mode in which the control device causes the work vehicle 100 to automatically travel is referred to as an "automatic traveling mode."

The work vehicle **100** further has a remotely-operated traveling function. The control device controls a travel device of the work vehicle **100** in response to remote operations performed by the user using the remote device **400,** to change the travel speed and travel direction of the work vehicle **100.** The work vehicle **100** can perform remotely-operated traveling not only outside fields but also inside fields. The mode in which the control device causes the work vehicle **100** to perform remotely-operated traveling is referred to as a "remote operation mode."

The work vehicle **100** includes a device that is used to perform positioning or ego position estimation, such as a GNN receiver or LiDAR sensor. In the automatic travel mode, the control device of the work vehicle **100** causes the work vehicle **100** to automatically travel based on the position of the work vehicle **100** and information about a target path generated by the management device **600.** The control device controls the operation of an implement in addition to control of the traveling of the work vehicle **100.** As a result, the work vehicle **100** can perform agricultural work using an implement while automatically traveling in a field. Furthermore, the work vehicle **100** can automatically travel on roads (e.g., agricultural roads or general roads) outside fields along a target path. When the work vehicle 100 automatically travels along a road outside fields, the work vehicle **100** travels along a target path while generating a local path along which obstacles can be avoided, based on data output from a sensing device such as a camera or LiDAR sensor. The work vehicle **100** may also travel in fields while generating a local path, or may be operated to travel along a target path without generating a local path, and stop when an obstacle is detected.

The management device **600** is a computer that manages agricultural work performed by the work vehicle 100. The management device **600** may, for example, be a server computer that performs centralized management on information about fields in a cloud, and assists in agriculture using data in the cloud. For example, the management device **600** can create a work plan for the work vehicle **100,** and create a target path for the work vehicle **100** according to the work plan. Alternatively, the management device **600** may generate a target path for the work vehicle **100** in response to the user's operation using the remote device **400.**

The remote device **400** is a computer that is used by a user who is located away from the work vehicle **100.** The remote device **400** illustrated in FIG. **1A** is, but not limited to, a laptop computer. The remote device **400** may be a stationary computer, such as a desktop personal computer (PC), or a mobile terminal, such as a smartphone or tablet computer.

The remote device **400** is used to remotely monitor the work vehicle **100** or remotely operate the work vehicle **100.** For example, the remote device **400** can display, on a display device, a video captured by at least one camera provided in the work vehicle **100.** The user can check a situation around the work vehicle **100** by viewing the video, and sends an instruction to stop, start, accelerate, decelerate, or change the travel direction to the work vehicle **100.**

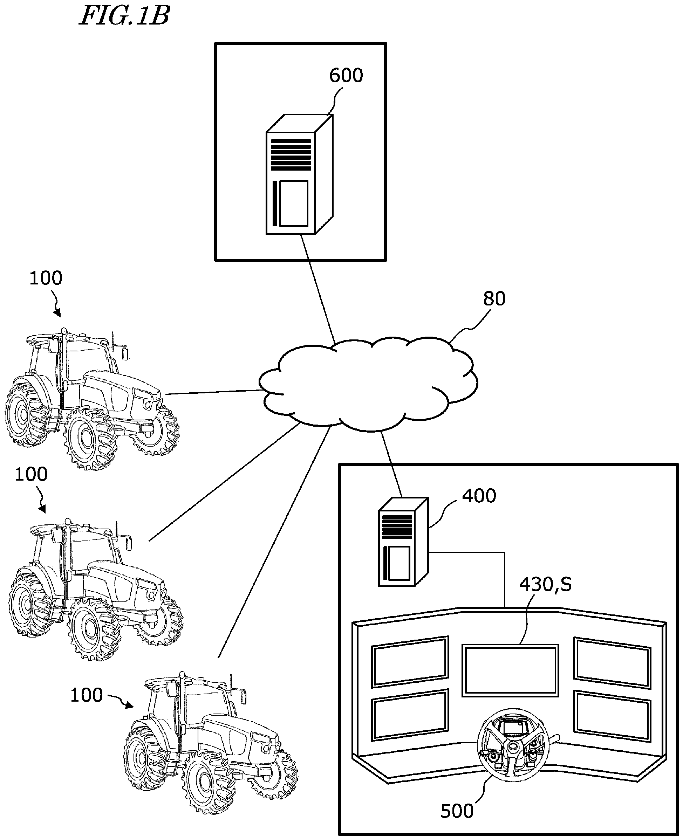

FIG. **1B** is a diagram illustrating another example of the agricultural management system. The agricultural management system illustrated in FIG. **1B** includes a plurality of work vehicles **100.** Although FIG. **1B** illustrates three work vehicles **100,** the number of work vehicles **100** is not particularly limited. The system may include agricultural machines (e.g., an agricultural drone) different from the work vehicle **100.** In the example of FIG. **1B****,** the remote device **400** is not a household terminal device, and is a computer that is provided in a center to remotely monitor agricultural machines. The remote device **400** may be connected to a remote maneuver machine **500** and at least one display **430** that are used by an operator in the remote monitoring center. Although FIG. **1B** illustrates five displays **430,** the number of displays **430** is not particularly limited. The remote maneuver machine **500** may include various apparatuses for remotely maneuvering the work vehicles **100** (e.g., a steering wheel, accelerator pedal, left and right brake pedals, clutch pedal, and various switches or levers). Although the remote maneuver machine **500** illustrated in FIG. **1B** is a device that imitates an operation apparatus that is used in manual operations of the work vehicle **100,** the remote maneuver machine **500** is not limited to such a device. For example, remote maneuver may be performed using a control device such as a joystick. Each display **430** can, for example, display an environmental map of an area including a field in which the work vehicles **100** perform agricultural work, and an image (e.g., moving images) captured by at least one camera mounted on the work vehicles **100.** The operator can recognize a situation around the work vehicles **100** while viewing images displayed on the displays **430.** The operator can remotely maneuver each agricultural machine, e.g., switches between the automatic traveling mode and the remote operation mode, depending on a situation around each work vehicle **100.**

A configuration and operation of the system according to this embodiment of the present disclosure will be described below in more detail.

### 1. Configuration

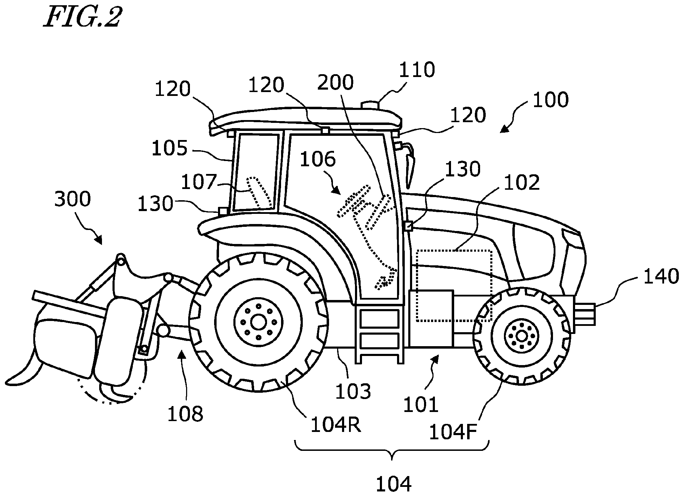

FIG. **2** is a side view schematically illustrating an example of an work vehicle **100** and an implement **300** connected to the work vehicle **100.** In this embodiment of the present disclosure, the work vehicle **100** can operate both in a manual driving mode and an automated driving mode. In the automated driving mode, the work vehicle **100** can perform unmanned traveling. The work vehicle **100** can perform automated driving both inside and outside fields. In the automated driving mode, the control device can operate in an automatic traveling mode in which the work vehicle **100** is caused to travel along a preset target path, and in a remote operation mode in which the work vehicle **100** is caused to travel in response to the user's operation using the remote device **400.** The user may, for example, be the user of the work vehicle **100** or an operator in the remote monitoring center. Switching between the automatic traveling mode and the remote operation mode may be carried out by the user performing a predetermined operation using the remote device **400.** For example, when the user performs an operation of instructing to start remote operation using the remote device **400** in the automatic traveling mode, the control device transitions to the remote operation mode. When the user performs an operation of instructing to start automatic traveling using the remote device **400** in the remote operation mode, the control device transitions to the automatic traveling mode.

As illustrated in FIG. **2****,** the work vehicle **100** includes a vehicle body **101,** a prime mover (engine) **102,** and a transmission **103.** The vehicle body **101** is provided with a travel device including tire-mounted wheels **104,** and a cabin **105.** The travel device includes four wheels **104,** axles for rotating the four wheels, and brakes to slow or stop the axles. The wheels **104** include a pair of front wheels **104F** and a pair of rear wheels **104R.** In the cabin **105,** a driver's seat **107,** a steering device **106,** an operation terminal **200,** and switches for operations are provided. One or both of the front wheel **104F** and the rear wheel **104R** may be replaced by a plurality of wheels to which a continuous track is attached (crawler) instead of a tire-mounted wheel.

The work vehicle **100** can switch between a four-wheel drive (4W) mode in which all of the front wheels **104F** and the rear wheels **104R** are a driven wheel, and a two-wheel drive (2W) mode in which the front wheels **104F** or the rear wheels **104R** are a driven wheel. The work vehicle **100** can also switch between a state in which the left and right brakes are linked together and a state in which the linkage is removed. When the linkage of the left and right brakes is removed, the left and right wheels **104** can be slowed or stopped separately. As a result, turning with a small turning radius can be performed.

The work vehicle **100** includes a plurality of sensing devices that sense surroundings of the work vehicle **100.** In the example illustrated in FIG. **2****,** the sensing devices include a plurality of cameras **120,** a LiDAR sensor **140,** and a plurality of obstacle sensors **130.** The sensing device may include only a portion of the camera **120,** the LiDAR sensor **140,** and the obstacle sensor **130.** The sensing device senses an environment around the vehicle body to output sensing data.

The cameras **120** may, for example, be provided at front, rear, right, and left portions of the work vehicle **100.** The cameras **120** capture an image of an environment around the work vehicle **100,** and generate image data. As used herein, image data generated by the camera **120** may be simply referred to as an "image." In addition, "generate image data by capturing an image" is in some cases referred to as "obtain an image." Images obtained by the cameras **120** may be transmitted to the remote device **400** for remote monitoring. The images may be used to monitor the work vehicle **100** during unmanned driving. The camera **120** may also be used to generate an image for recognizing objects on the ground, obstacles, white lines, signs, indications, or the like around the work vehicle **100** when the work vehicle **100** is traveling on a road (an agricultural road or general road) outside fields.

In the example illustrated in FIG. **2****,** the LiDAR sensor **140** is disposed on a bottom portion of a front surface of the vehicle body **101.** The LiDAR sensor **140** may be disposed at other positions. While the work vehicle **100** is traveling mainly outside fields, the LiDAR sensor **140** repeatedly outputs sensor data indicating distances to and directions of measurement points of objects existing in a surrounding environment, or the two-dimensional or three-dimensional coordinate values of the measurement points, while the work vehicle **100** is traveling. The sensor data output from the LiDAR sensor **140** is processed by the control device of the work vehicle **100.** The control device can perform ego position estimation on the work vehicle **100** by performing matching between the sensor data and an environmental map. The control device can further detect an object such as an obstacle existing around the work vehicle **100** based on the sensor data, and generate a local path along which the work vehicle **100** is to actually travel, along a target path (also referred to as a "global path"). The control device can generate or edit an environmental map by utilizing an algorithm such as simultaneous localization and mapping (SLAM). The work vehicle **100** may include a plurality of LiDAR sensors disposed at different positions and orientations.

In FIG. **2****,** the plurality of obstacle sensors **130** are provided at a front portion and a rear portion of the cabin **105.** Obstacle sensors **130** may be arranged at other portions. For example, one or more obstacle sensors **130** may be provided at any position of a side portion, front portion, and rear portion of the vehicle body **101.** The obstacle sensor **130** may, for example, include a laser scanner or ultrasonic sonar. The obstacle sensor **130** is used to detect surrounding obstacles during automatic traveling to cause the work vehicle **100** to stop, or circumvent the obstacles. The LiDAR sensor **140** may be used as one of the obstacle sensors **130.**

The work vehicle **100** further includes a GNSS unit **110.** The GNSS unit **110** includes a GNN receiver. The GNN receiver may include an antenna that receives signals from GNSS satellites, and a processor that calculates the position of the work vehicle **100** based on the signals received by the antenna. The GNSS unit **110** receives satellite signals transmitted from a plurality of GNSS satellites, and performs positioning based on the satellite signals. the GNSS unit **110** may be provided at an upper portion of the cabin **105** in this embodiment, and may be provided at other positions.

The GNSS unit **110** may include an inertial measurement device (IMU). The position data may be supplemented using a signal from the IMU. The IMU can measure a tilt and minute motion of the work vehicle **100.** By supplementing the position data based on satellite signals using data obtained by the IMU, positioning performance can be improved.

The control device of the work vehicle **100** may use sensing data obtained by a sensing device such as the camera **120** or the LiDAR sensor **140** in addition to the result of positioning by the GNSS unit **110.** In the case in which there are objects on the ground serving as a feature point in an environment in which the work vehicle **100** travels, such as an agricultural road, forest road, general road, or orchard, the position and orientation of the work vehicle **100** can be estimated with high precision based on data obtained by the camera **120** or the LiDAR sensor **140,** and an environmental map previously stored in a storage device. By correcting or supplementing position data based on satellite signals using data obtained by the camera **120** or the LiDAR sensor **140,** the position of the work vehicle **100** can be determined with higher precision.

The prime mover **102** may, for example, be a diesel engine. An electric motor may be used instead of the diesel engine. The transmission **103** is capable of changing the propelling force and movement speed of the work vehicle **100** by changing gear ratios. The transmission **103** is also capable of allowing the work vehicle **100** to switch between forward movement and rearward movement.

The steering device **106** includes a steering wheel, a steering shaft connected to the steering wheel, and a power steering device that provides assistance in steering of the steering wheel. The front wheels **104F** are steered wheels. By changing the steering angle of the front wheels **104F,** the direction in which the work vehicle **100** travels can be changed. The steering angle of the front wheels **104F** can be changed by operating the steering wheel. The power steering device includes a hydraulic device or electric motor that supplies an assistive force for changing the steering angle of the front wheels **104F.** When automatic steering is performed, the steering angle can be automatically adjusted by the force of the hydraulic device or electric motor under the control of the control device provided in the work vehicle **100.**

A connecting device **108** is provided at a front portion of the vehicle body **101.** The connecting device **108** includes, for example, a three-point support device (also referred to as a "three-point linkage" or "three-point hitch"), a power take-off (PTO) shaft, a universal joint, and a communication cable. The connecting device **108** can be used to removably connect an implement **300** to the work vehicle **100.** The connecting device **108** can change the position or orientation of the implement **300** by raising or lowering the three-point linkage using, for example, a hydraulic device. In addition, power can be transmitted from the work vehicle **100** to the implement **300** through the universal joint. While towing the implement **300,** the work vehicle **100** allows the implement **300** to perform predetermined work. A connecting device may also be provided at a front portion of the vehicle body **101.** In that case, an implement can be connected in front of the work vehicle **100.**

Although the implement **300** illustrated in FIG. **2** is a rotary tiller, the implement **300** is not limited to a rotary tiller. For example, any arbitrary implement such as a seeder, spreader, transplanter, mower, rake implement, baler, harvester, sprayer, or harrow may be connected to the work vehicle **100** for use.

The work vehicle **100** illustrated in FIG. **2** can be driven by manned driving, or alternatively, may only be capable of performing unmanned driving. In that case, components that are only required for manned driving such as the cabin **105,** the steering device **106,** and the driver's seat **107** do not need to be provided in the work vehicle **100.** An unmanned work vehicle **100** may travel by autonomous driving or a user's remote operation.

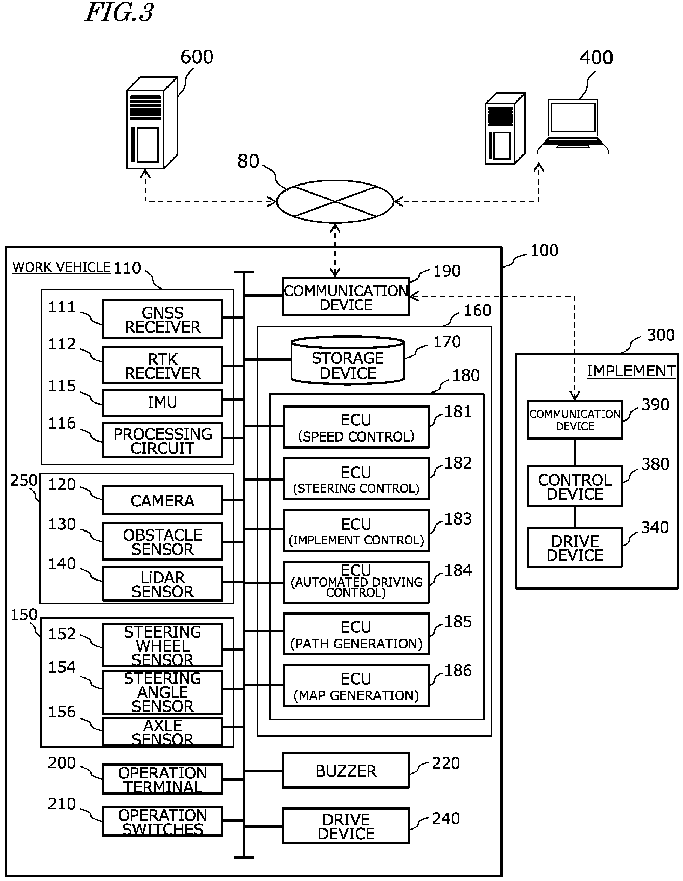

FIG. **3** is a block diagram illustrating an example configuration of the work vehicle **100** and the implement **300.** The work vehicle **100** and the implement **300** can communicate with each other through the communication cable included in the connecting device **108.** The work vehicle **100** can communicate with the remote device **400** and the management device **600** through the network **80.**

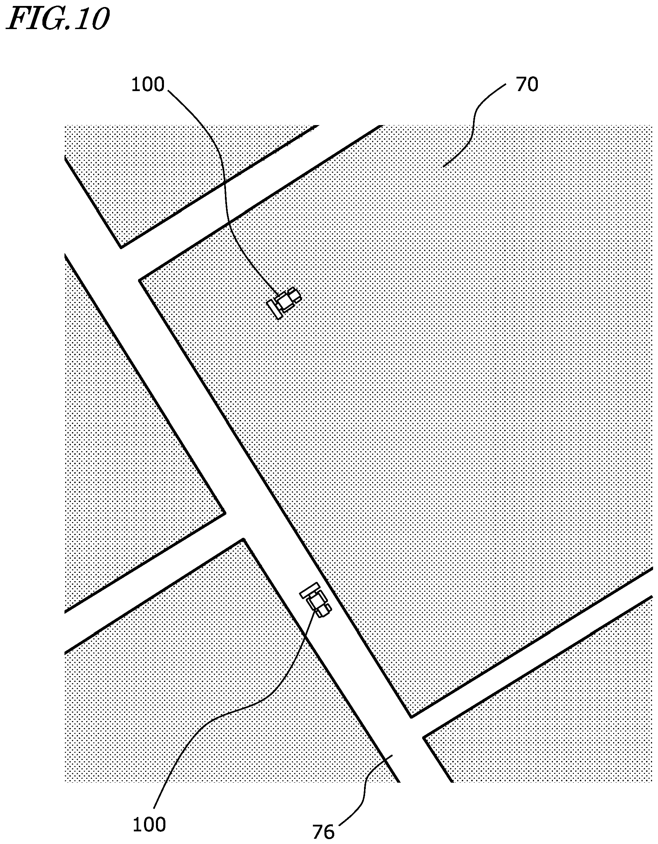

In the example of FIG. **10****,** the work vehicle **100** includes, in addition to a GNSS unit **110,** a sensing device **250** (the camera **120,** the obstacle sensor **130,** and the LiDAR sensor **140**), and an operation terminal **200,** sensors **150** that detect an operation state of the work vehicle **100,** a travel control system **160,** a communication device **190,** operation switches **210,** a buzzer **220,** and a drive device **240.** These components are connected so as to communicate with each other through a bus. The GNSS unit **110** includes a GNN receiver **111,** an RTK receiver **112,** an inertial measurement device (IMU) **115,** and a processing circuit **116.** The sensors **150** include a steering wheel sensor **152,** a steering angle sensor **154,** and an axle sensor **156.** The travel control system **160** includes a storage device **170** and a control device **180.** The control device **180** includes a plurality of electronic control units (ECUs) **181** to **186.** The implement **300** includes a drive device **340,** a control device **380,** and a communication device **390.** It should be noted that FIG. **3** illustrates components that are highly involved with automated driving and remote maneuver of the work vehicle **100,** but not the other components.

The GNSS receiver **111** in the GNSS device **110** receives satellite signals transmitted from a plurality of GNSS satellites, and generates GNSS data based on the satellite signals. The GNSS data may be generated in a predetermined format such as the NMEA-0183 format. The GNSS data may include, for example, the identification number, elevation angle, azimuth angle, and value indicating a reception intensity of each of the satellites from which the satellite signals have been received.

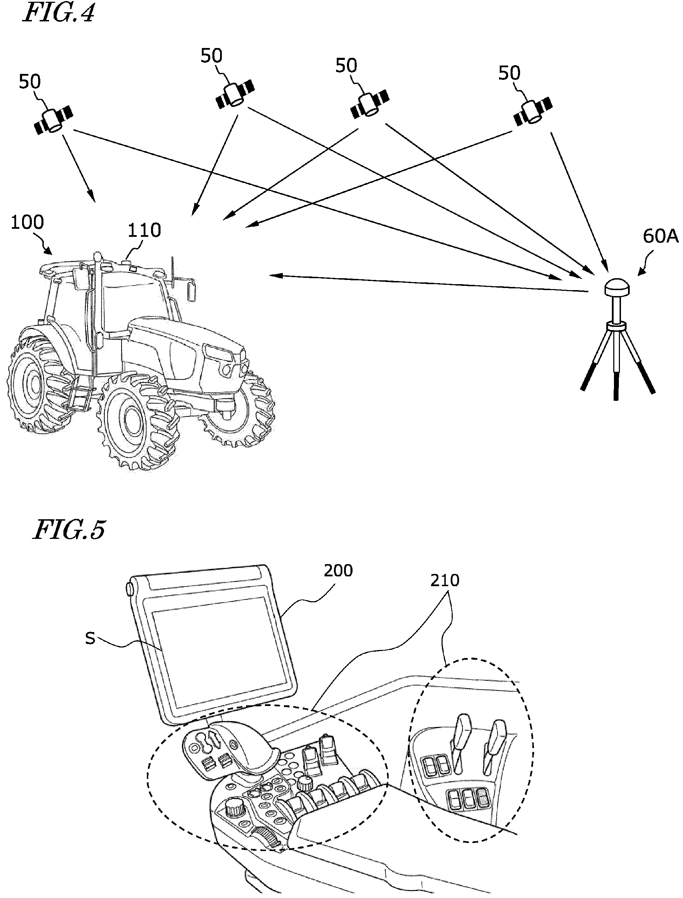

The GNSS unit **110** illustrated in FIG. **3** performs positioning on the work vehicle **100** by utilizing real-time kinematic (RTK) -GNSS. FIG. **4** is a conceptual diagram illustrating an example of the work vehicle **100** performing positioning based on RTK-GNSS. In the positioning based on RTK-GNSS, not only satellite signals transmitted from a plurality of GNSS satellites **50,** but also a correction signal that is transmitted from a reference station **60A,** are used. The reference station **60A** may be installed near a field in which the work vehicle **100** travels (e.g., at a position within 10 km of the work vehicle **100**). The reference station **60A** generates a correction signal in, for example, an RTCM format based on the satellite signals received from the plurality of GNSS satellites **50,** and transmits the correction signal to the GNSS unit **110.** The RTK receiver **112,** which includes an antenna and a modem, receives the correction signal transmitted from the reference station **60A.** Based on the correction signal, the processing circuit **116** of the GNSS unit **110** corrects the result of positioning performed by the GNSS receiver **111.** The use of RTK-GNSS enables positioning with a precision on the order of several centimeters of error, for example. Positional information including latitude, longitude, and altitude information is obtained through highly precise positioning performed based on RTK-GNSS. The GNSS unit **110** calculates the position of the work vehicle **100** at a frequency of, for example, about 1 to 10 times per second.

It should be noted that the positioning method is not limited to RTK-GNSS, and any positioning method (e.g., an interferometric positioning method or a relative positioning method) that provides positional information with the required precision may be used. For example, positioning may be performed using a virtual reference station (VRS) or a differential global positioning system (DGPS). In the case in which positional information having the required precision can be obtained without the use of the correction signal transmitted from the reference station **60A,** positional information may be generated without the use of the correction signal. In that case, the GNSS unit **110** may not include the RTK receiver **112.**

Even in the case in which RTK-GNSS is used, at a spot where the correction signal cannot be obtained from the reference station **60A** (e.g., on a road far from the field), the position of the work vehicle 100 is estimated by another method without using the signal from the RTK receiver 112. For example, the position of the work vehicle 100 may be estimated by performing matching between data output from the LiDAR sensor **140** and/or the camera **120** and a high-precision environmental map.

The GNSS unit **110** in this embodiment of the present disclosure further includes the IMU **115.** The IMU **115** may include a 3-axis accelerometer and a 3-axis gyroscope. The IMU **115** may include a direction sensor such as a 3-axis geomagnetic sensor. The IMU **115** functions as a motion sensor that can output signals representing parameters such as the acceleration, velocity, displacement, and orientation of the work vehicle **100.** The processing circuit **116** can estimate the position and orientation of the work vehicle **100** with a higher precision based on the satellite signals and the correction signal and, in addition, a signal output from the IMU **115.** The signal output from the IMU **115** may be used for correction or supplementation of the position calculated based on the satellite signals and the correction signal. The IMU **115** outputs a signal more frequently than the GNSS receiver **111.** By utilizing the more frequent signals, the processing circuit **116** allows more frequent measurements (e.g., at least 10 Hz) of the position and orientation of the work vehicle **100.** Instead of the IMU **115,** a 3-axis accelerometer and a 3-axis gyroscope may be separately provided. The IMU **115** may be provided separately from the GNSS unit **110.**

The camera **120** is an imaging device that captures an image of an environment around the work vehicle **100.** The camera **120** includes an image sensor, such as a charge coupled device (CCD) or a complementary metal oxide semiconductor (CMOS), for example. In addition, the camera **120** may include an optical system including at least one lens, and a signal processing circuit. When the work vehicle **100** is traveling, the camera **120** captures an image of an environment around the work vehicle **100,** and generates image data (e.g., moving image data). The camera **120** can capture moving images at a frame rate of at least 3 frames per second (fps), for example. The images generated by the camera **120** may be used when a remote monitor checks an environment around the work vehicle **100** using the remote device **400,** for example. The images generated by the camera **120** may also be used for positioning and/or obstacle detection. As illustrated in FIG. **2****,** a plurality of cameras **120** may be provided on the work vehicle **100** at different positions, or a single camera may be provided. A visible camera, which generates visible light images, and an infrared camera, which generates infrared images, may be separately provided. Both a visible camera and an infrared camera may be provided as a camera for generating images for monitoring purposes. The infrared camera may also be used for detection of obstacles at nighttime.

The obstacle sensor **130** detects objects existing around the work vehicle **100.** The obstacle sensor **130** may, for example, include a laser scanner or ultrasonic sonar. When an object exists at a position within a predetermined distance from the obstacle sensor **130,** the obstacle sensor **130** outputs a signal indicating the presence of the obstacle. A plurality of obstacle sensors **130** may be provided on the work vehicle **100** at different positions. For example, a plurality of laser scanners and a plurality of ultrasonic sonars may be arranged on the work vehicle **100** at different positions. By providing a number of obstacle sensors **130** in such a manner, blind spots in monitoring obstacles around the work vehicle **100** can be reduced.

The steering wheel sensor **152** measures the angle of rotation of the steering wheel of the work vehicle **100.** The steering angle sensor **154** measures the steering angle of the front wheels **104F,** which are steered wheels. Measurement values obtained by the steering wheel sensor **152** and the steering angle sensor **154** are used for steering control performed by the control device **180.**

The axle sensor **156** measures the rotational speed, i.e., the number of revolutions per unit time, of an axle that is connected to the wheels **104.** The axle sensor **156** may, for example, employ a magnetoresistive element (MR), a Hall element, or an electromagnetic pickup. The axle sensor **156** outputs a numerical value indicating the number of revolutions per minute (unit: rpm) of the axle, for example. The axle sensor **156** is used to measure the speed of the work vehicle **100.**

The drive device **240** includes various types of devices required to cause the work vehicle **100** to travel such as the prime mover **102,** the transmission **103,** and the steering device **106,** and various types of devices required to drive the implement **300** such as the connecting device **108.** The prime mover **102** may include an internal combustion engine, such as a diesel engine. The drive device **240** may include an electric motor for traction instead of or in addition to the internal combustion engine.

The buzzer **220** is an audio output device to make a warning sound to notify the user of an abnormality. For example, the buzzer **220** may make a warning sound when an obstacle is detected during automated driving. The buzzer **220** is controlled by the control device **180.**

The storage device **170** includes at least one storage media, such as a flash memory or magnetic disc. The storage device **170** stores various types of data that are generated by the GNSS unit **110,** the camera **120,** the obstacle sensor **130,** the LiDAR sensor **140,** the sensors **150,** and the control device **180.** The data that is stored by the storage device **170** includes map data of an environment in which the work vehicle **100** travels (environmental map), and data of a global path (target path) for automated driving. The environmental map includes information about a plurality of fields in which the work vehicle **100** performs agricultural work and roads around the fields. The environmental map and the target path may be generated by a processing device (i.e., a processor) in the management device **600.** It should be noted that in this embodiment of the present disclosure, the control device **180** may have the function of generating or editing the environmental map and the target path. The control device **180** can edit the environmental map and target path obtained from the management device **600** based on a travel environment of the work vehicle **100.**

The storage device **170** also stores data of a work plan received by the communication device **190** from the management device **600.** The work plan includes information about a plurality of types of agricultural work to be performed by the work vehicle **100** over a plurality of working days. The work plan may, for example, be data of a work schedule including information about the time when the work vehicle **100** is scheduled to perform each type of agricultural work on each working day. The storage device **170** also stores a computer program for causing each ECU in the control device **180** to execute various operations described below. Such a computer program may be provided to the work vehicle **100** through a storage media (e.g., a semiconductor memory, optical disc, etc.) or a telecommunication line (e.g., the Internet). Such a computer program may be sold as commercial software.

The control device **180** includes a plurality of ECUs. The plurality of ECUs may, for example, include an ECU **181** for speed control, an ECU **182** for steering control, an ECU **183** for implement control, and an ECU **184** for automated driving control, an ECU **185** for path generation, and an ECU **186** for map generation.

The ECU **181** controls the prime mover **102,** the transmission **103,** and brakes included in the drive device **240** to control the speed of the work vehicle **100.**

The ECU **182** controls the hydraulic device or electric motor included in the steering device **106** based on a measurement value obtained by the steering wheel sensor **152** to control steering of the work vehicle **100.**

The ECU **183** controls the operation of the three-point linkage, the PTO shaft, and the like that are included in the connecting device **108** in order to cause the implement **300** to perform the desired operation. The ECU **183** also generates a signal for controlling the operation of the implement **300,** and transmits the signal from the communication device **190** to the implement **300.**

The ECU **184** performs computation and control for achieving automated driving based on data output from the GNSS unit **110,** the camera **120,** the obstacle sensor **130,** the LiDAR sensor **140,** and the sensors **150.** For example, the ECU **184** determines the position of the work vehicle **100** based on data output from at least one of the GNSS unit **110,** the camera **120,** and the LiDAR sensor **140.** In fields, the ECU **184** may determine the position of the work vehicle **100** only based on data output from the GNSS unit **110.** The ECU **184** may estimate or correct the position of the work vehicle **100** based on data obtained by the camera **120** and the LiDAR sensor **140.** By utilizing the data obtained by the camera **120** and the LiDAR sensor **140,** the precision of positioning can be further improved. In fields, the ECU **184** may estimate the position of the work vehicle **100** based on data output from the LiDAR sensor **140** or the camera **120.** For example, the ECU **184** may estimate the position of the work vehicle **100** by performing matching between data output from the LiDAR sensor **140** or the camera **120** and an environmental map. During automated driving, the ECU **184** performs computation required for traveling of the work vehicle **100** along a target path or a local path, based on the estimated position of the work vehicle **100.** The ECU **184** sends a command to change the speed to the ECU **181,** and a command to change the steering angle to the ECU **182.** In response to the command to change the speed, the ECU **181** controls the prime mover **102,** the transmission **103,** or the brakes to change the speed of the work vehicle **100.** In response to the command to change the steering angle, the ECU **182** controls the steering device **106** to change the steering angle.

The ECU **184** also performs control related to the remotely-operated traveling of the work vehicle **100.** In the remote operation mode, the ECU **184** controls the ECUs **181, 182,** and **183** in response to a signal that is received by the communication device **190** from the remote device **400.** As a result, operations such as speed control and steering control of the work vehicle **100,** raising and lowering of the implement **300,** and switching on/off of the implement **300** can be carried out in response to the user's remote operation.

While the work vehicle **100** is traveling along the target path, the ECU **185** sequentially generates local paths along which the work vehicle **100** can avoid obstacles. During traveling of the work vehicle **100,** the ECU **185** recognizes an obstacle existing around the work vehicle **100** based on the data output from the camera **120,** the obstacle sensor **130,** and the LiDAR sensor **140.** The ECU **185** generates a local path such that the work vehicle **100** avoids the recognized obstacle.

The ECU **185** may have a function of performing global path planning instead of the management device **160.** In that case, the ECU **185** may determine a destination of the work vehicle **100** based on a work schedule stored in the storage device **170,** and determine a target path from a position where the work vehicle **100** starts moving to the destination. The ECU **185** can, for example, generate a path along which the work vehicle **100** can reach the destination within the shortest period of time, as a target path, based on an environmental map including information about roads stored in the storage device **170.** Alternatively, the ECU **185** may generate, as a target path, a path including a particular type(s) of road (e.g., roads along particular objects on the ground such as agricultural roads and waterways, and roads on which satellite signals can be satisfactorily received from a GNSS satellite) with higher priority, based on attribute information of roads included in an environmental map.

The ECU **186** generates or edits a map of an environment in which the work vehicle **100** travels. In this embodiment of the present disclosure, an environmental map generated by an external device such as the management device **600** is transmitted to the work vehicle **100** and recorded in the storage device **170.** Instead, the ECU **186** can generate or edit an environmental map. An operation in the case in which the ECU **186** generates an environmental map will be described below. An environmental map may be generated based on sensor data output from the LiDAR sensor **140.** When generating an environmental map, the ECU **186** sequentially generates three-dimensional point cloud data based on sensor data output from the LiDAR sensor **140** while the work vehicle **100** is traveling. The ECU **186** can generate an environmental map by concatenating the pieces of point cloud data sequentially generated by utilizing an algorithm such as SLAM. The environmental map thus generated is a high-precision three-dimensional map, and may be used in ego position estimation performed by the ECU **184.** Based on this three-dimensional map, a two-dimensional map that is used in global path planning may be generated. As used herein, the three-dimensional map that is used in ego position estimation and the two-dimensional map that is used in global path planning will both be referred to as an "environmental map." The ECU **186** can further edit a map by adding, to the map, various types of attribute information relating to objects on the ground (e.g., waterways, rivers, grasses, and trees), the type of a road (e.g., whether or not the road is an agricultural road), the state of the road surface, the passability of a road, and the like the like, which are recognized based on data output from the camera **120** or the LiDAR sensor **140.**

By the operations of these ECUs, the control device **180** allows automatic traveling and remotely-operated traveling. During automatic traveling, the control device **180** controls the drive device **240** based on the measured or estimated position of the work vehicle **100** and the generated path. As a result, the control device **180** can cause the work vehicle **100** to travel along the target path. During remotely-operated traveling, the control device **180** controls traveling of the work vehicle **100** based on a signal transmitted from the remote device **400.** In other words, the control device **180** controls the drive device **240** in response to the user's operation using the remote device **400.** As a result, the control device **180** can cause the work vehicle **100** to travel in accordance with the user's instruction.

The plurality of ECUs included in the control device **180** can communicate with each other in accordance with a vehicle bus standard, such as the controller area network (CAN). Instead of CAN, faster communication methods such as automotive Ethernet (registered trademark) may be used. Although the ECUs **181 to 184** are illustrated as individual blocks in FIG. **3****,** the function of each of the ECUs **181** to **186** may be implemented by a plurality of ECUs. Alternatively, an onboard computer in which at least a portion of the functions of the ECUs **181** to **186** are integrated may be provided. The control device **180** may include other ECUs in addition to the ECUs **181** to **186,** and may include any number of ECUs according to functions. Each ECU includes a processing circuit including at least one processor.

The communication device **190** includes a circuit that communicates with the implement **300,** the terminal device **400,** and the management device **600.** The communication device **190** transmits sensing data output from the sensing device **250** to the remove device **400.** The communication device **190** includes a circuit that exchanges signals conforming to an ISOBUS standard such as ISOBUS-TIM between itself and the communication device **390** of the implement **300.** This allows the implement **300** to perform the desired operation, or acquisition of information from the implement **300.** The communication device **190** may further include an antenna and a communication circuit for exchanging signals through the network **80** with communication devices of the remote device **400** and the management device **600.** The network **80** may, for example, include a cellular mobile communication network such as 3G, 4G, or 5G, and the Internet. The communication device **190** may have the function of communicating with a mobile terminal that is used by a monitor who is located near the work vehicle **100.** Between the communication device **190** and such a mobile terminal, communication may be performed in accordance with any wireless communication standard, such as Wi-Fi (registered trademark), a cellular mobile communication standard (e.g., 3G, 4G, or 5G), or Bluetooth (registered trademark).

The operation terminal **200** is used by the user to perform operations related to the traveling of the work vehicle **100** and the operation of the implement **300,** and may also be referred to as a virtual terminal (VT). The operation terminal **200** may include a display device such as a touchscreen, and/or at least one button. The display device may, for example, be a liquid crystal display or organic light-emitting diode (OLED) display. By operating the operation terminal **200,** the user can perform various operations such as switching on/off the automated driving mode, switching on/off the remote operation mode, recording or editing an environmental map, setting a target path, and switching on/off the implement **300.** At least a portion of these operations may also be performed by operating the operation switches **210.** The operation terminal **200** may be configured so as to be removed from the work vehicle **100.** A user who is located away from the work vehicle **100** may operate the removed operation terminal **200** to control the operation of the work vehicle **100.** Instead of the operation terminal **200,** the user may operate a computer on which required application software has been installed, such as the remote device **400,** to control the operation of the work vehicle **100.**

FIG. **5** is a diagram illustrating an example of the operation terminal **200** and the operation switches **210,** which are provided in the cabin **105.** In the cabin **105,** the operation switches **210,** including a plurality of switches that can be operated by the user, are disposed. The operation switches **210** may, for example, include a switch to choose a gear ratio for a main or sub transmission, a switch to switch between the automated driving mode and the manual driving mode, a switch to switch between forward traveling and backward traveling, a switch to switch between four-wheel drive and two-wheel drive, a switch to remove the linkage of the left and right brakes, and a switch to raise or lower the implement **300.** It should be noted that in the case in which the work vehicle **100** only perloerringms unmanned driving and does not have the manned driving function, the work vehicle **100** does not need to include the operation switches **210.**

At least a portion of operations that can be carried out by the operation terminal **200** or the operation switches **210** may also be carried out by remote operations using the remote device **400.** Any of the operations may be carried out by the user performing a predetermined operation on a screen displayed on the display of the remote device **400.**

The drive device **340** in the implement **300** illustrated in FIG. **3** performs operations required for the implement **300** to perform predetermined work. The drive device **340** includes a device suitable for the purpose of the implement **300,** such as a hydraulic device, electric motor, or pump. The control device **380** controls the operation of the drive device **340.** In response to a signal transmitted from the work vehicle **100** through the communication device **390,** the control device **380** causes the drive device **340** to perform various operations. The control device **380** can also transmit a signal corresponding to a state of the implement **300** from the communication device **390** to the work vehicle **100.**

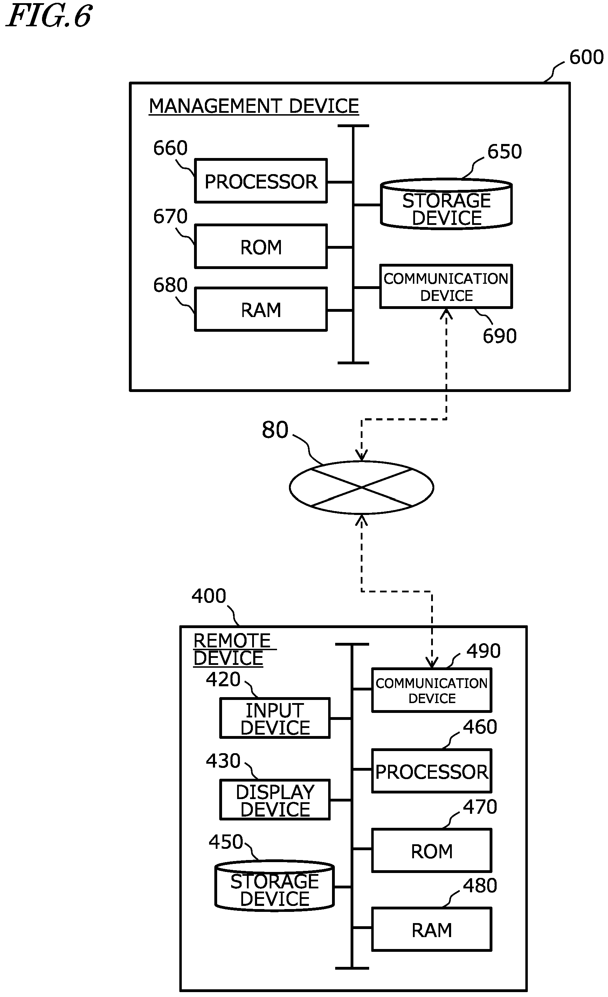

Next, configurations of the management device **600** and the remote device **400** will be described with reference to FIG. **6.** FIG. **6** is a block diagram illustrating example schematic hardware configurations of the management device **600** and the remote device **400.**

The management device **600** includes a storage device **650,** a processor **660,** a read only memory (ROM) **670,** a random access memory (RAM) **680,** and a communication device **690.** These components are communicably connected to each other through a bus. The management device **600** may function as a cloud server to manage the schedule of agricultural work to be performed by the work vehicle **100** in a field, and assist in agriculture using data managed by the management device **600** itself. The user can input information required for creation of a work plan using the remote device **400,** and upload the information to the management device **600** through the network **80.** The management device **600** can create a schedule of agricultural work, that is, a work plan based on that information. The management device **600** can also generate or edit an environmental map and perform global path planning for the work vehicle **100.** The environmental map may be distributed from a computer external to the management device **600.**

The communication device **690** is a communication module that allows communication between the work vehicle **100** and the remote device **400** through the network **80.** The communication device **690** can perform wired communication conforming to a communication standard such as IEEE1394 (registered trademark) or Ethernet (registered trademark). The communication device **690** may perform wireless communication conforming to Bluetooth (registered trademark) or Wi-Fi, or cellular mobile communication conforming to 3G, 4G, 5G, or the like.

The processor **660** may, for example, be an integrated circuit including a central processing unit (CPU). The processor **660** may be implemented by a microprocessor or microcontrol device. Alternatively, the processor **660** may be implemented by a field programmable gate array (FPGA), graphics processing unit (GPU), application specific integrated circuit (ASIC), application specific standard product (ASSP), or a combination of two or more selected from these circuits. The processor **660** sequentially executes a computer program in which commands to execute one or more processes are described, and which is stored in the ROM **670,** thereby carrying out a desired process.

The ROM **670** is, for example, writable memory (e.g., PROM), rewritable memory (e.g., flash memory), or read only memory. The ROM **670** stores a program that controls the operation of the processor **660.** The ROM **670** does not need to be a single storage media, and may be a set of storage media. A portion of the set of storage media may be a removable memory.

The RAM **680** provides a work area in which the control program stored in the ROM **670** is temporarily loaded during booting. The RAM **680** does not need to be a single storage media, and may be a set of storage media.

The storage device **650** mainly serves as a storage for a database. The storage device **650** may, for example, be a magnetic storage device or semiconductor storage device. An example of the magnetic storage device is a hard disk drive (HDD). An example of the semiconductor storage device is a solid state drive (SSD). The storage device **650** may be separate from the management device **600.** For example, the storage device **650** may be connected to the management device **600** through the network **80,** and may, for example, be a cloud storage.

The remote device **400** illustrated in FIG. **6** includes an input device **420,** a display device (display) **430,** a storage device **450,** a processor **460,** a ROM **470,** a RAM **480,** and a communication device **490.** These components are communicably connected to each other through a bus. The input device **420** converts an instruction from the user into data, and inputs the data into a computer. The input device **420** may, for example, be a keyboard, mouse, or touchscreen. The display device **430** may, for example, be a liquid crystal display or organic EL display. The processor **460,** the ROM **470,** the RAM **480,** the storage device **450,** and the communication device **490** are substantially the same as the corresponding components described above regarding the example hardware configurations of the management device **600,** and will not be described.

In the example of FIG. **6****,** the remote device **400** is a computer including a display and an input device as illustrated in FIG. **1A****.** As illustrated in FIG. **1B****,** the remote device **400** may be a computer connected to the remote maneuver machine **500** and the display **430** in the remote monitoring center.

### 2. Operations

Operations of the work vehicle **100,** the remote device **400,** and the management device **600** will be described below.

### 2-1. Automatic traveling operation

Firstly, an example operation of automatic traveling of the work vehicle **100** will be described. The work vehicle **100** according to this embodiment of the present disclosure can automatically travel both inside and outside fields. Inside fields, the work vehicle **100** drives the implement **300** to perform predetermined agricultural work while traveling along a preset target path. When an obstacle is detected by the obstacle sensor **130** while the work vehicle **100** is traveling in a field, the work vehicle **100** stops traveling and performs operations of making a warning sound from the buzzer **220,** transmitting a warning signal to the remote device **400,** and the like. Inside fields, the positioning of the work vehicle **100** is performed mainly based on data output from the GNSS unit **110.** Meanwhile, outside fields, the work vehicle **100** automatically travels along a target path to be set for an agricultural road or general road outside fields. When the work vehicle **100** is traveling outside fields, the work vehicle **100** performs local path planning based on data obtained by the camera **120** or the LiDAR **140.** When an obstacle is detected outside fields, the work vehicle **100** avoids the obstacle or stops at the spot. Outside fields, the position of the work vehicle **100** is estimated based on positioning data output from the GNSS unit **110,** and in addition, data output from the LiDAR sensor **140** or the camera **120.**

An operation of the work vehicle **100** when automatically traveling inside a field will first be described below, before an operation of the work vehicle **100** automatically traveling outside fields will be described.

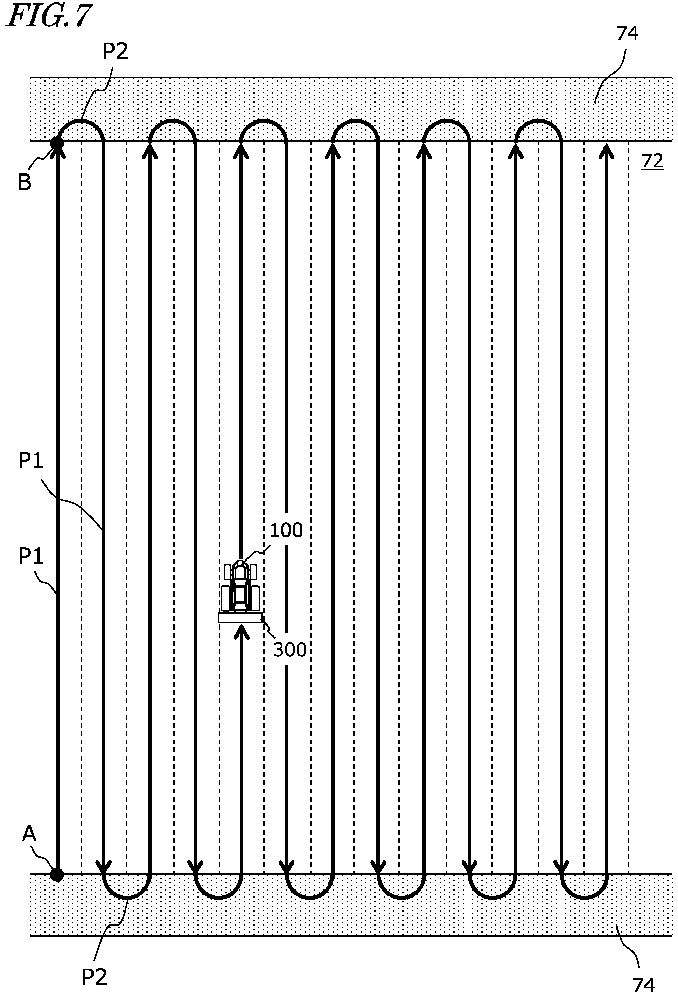

FIG. **7** is a diagram schematically illustrating an example of the work vehicle **100** automatically traveling along a target path in a field. In this example, the field includes a work area **72** in which the work vehicle **100** performs work using the implement **300,** and headlands **74** that are located near an outer edge of the field. The user may previously specify, on a map, which area of a field corresponds to a work area **72** or a headlands **74.** In this example, a target path includes a plurality of main paths **P1** parallel to each other and a plurality of turning paths **P2** connecting the plurality of main paths **P1** together. The main paths **P1** are located in the work area **72,** and the turning paths **P2** are located in the headlands **74.** Although each main path **P1** in FIG. **7** is illustrated as a linear path, each main path **P1** may also include a curved portion(s). The main paths **P1** may, for example, be automatically generated by the user performing an operation of specifying two points (in FIG. **7****,** points **A** and **B**) at or near an end of a field while viewing a map of the field displayed on the operation terminal **200** or the remote device **400.** In that case, the main paths **P1** are set in parallel with the line segment connecting the points **A** and **B** specified by the user, and a target path in the field is generated by connecting the main paths **P1** together by the turning paths **P2.** In FIG. **7****,** dashed lines represent a work breadth of the implement **300.** The work breadth is previously set and recorded in the storage device **170.** The work breadth may be set and recorded by the user operating the operation terminal **200** or the remote device **400.** Alternatively, the work breadth may be automatically recognized and recorded when the implement **300** is connected to the work vehicle **100.** An interval between each main path **P1** may be set, depending on the work breadth. The target path may be generated based on the user's operation before the start of automated driving. The target path may, for example, be generated so as to cover the entire work area **72** in the field. Along the target path illustrated in FIG. **7****,** the work vehicle **100** automatically travels back and forth, from a start point to ending point of work. it should be noted that the target path illustrated in FIG. **7** is merely illustrative, and a target path may be determined in any suitable manner.

Next, an example of control by the control device **180** during automated driving in a field will be described.

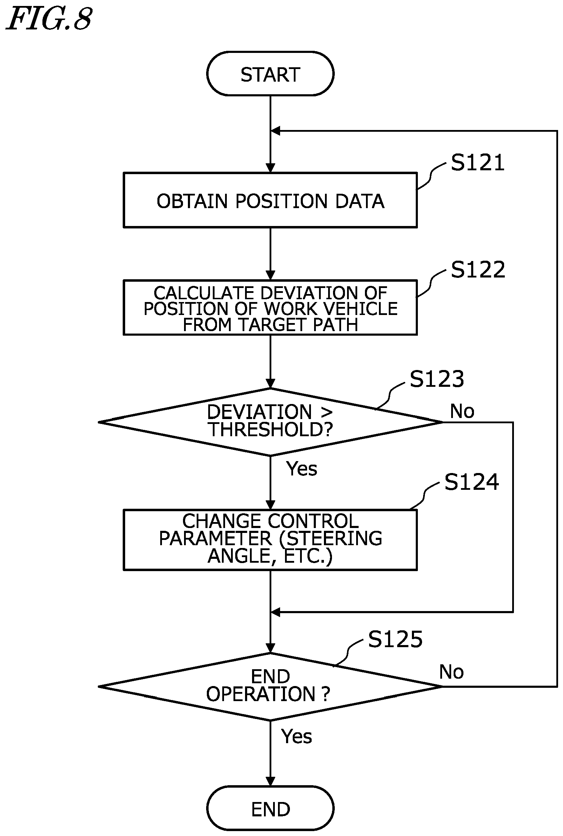

FIG. **8** is a flowchart illustrating an example operation of steering control during automated driving performed by the control device **180.** The control device **180** performs automatic steering by performing the operations of steps **S121** to **S125** of FIG. **8** while the work vehicle **100** is traveling. Concerning the speed, the speed may be maintained at a preset speed, for example. The control device **180** obtains data indicating the position of the work vehicle **100** generated by the GNSS unit **110** while the work vehicle **100** is traveling (step **S121**)**.** Next, the control device **180** calculates a deviation of the position of the work vehicle **100** from a target path (step **S122**)**.** The deviation represents a distance between the position at that time of the work vehicle **100** and the target path. The control device **180** determines whether or not the calculated positional deviation exceeds a preset threshold (step **S123**)**.** If the deviation exceeds the threshold, the control device **180** changes the steering angle so as to reduce the deviation, by changing a control parameter of the steering device included in the drive device **240.** If, in step **S123,** the deviation does not exceed the threshold, the operation of step **S124** is not performed. In the next step **S125,** the control device **180** determines whether or not a command to end the operation has been received. The command to end the operation may be issued when the user instructs to stop automated driving by a remote operation, or when the work vehicle **100** reaches the destination, for example. If the command to end the operation is not issued, control returns to step **S121,** in which a similar operation is performed based on the newly measured position of the work vehicle **100.** The control device **180** repeatedly performs the operations of steps **S121** to **S125** until the command to end the operation is issued. The above operations are performed by the ECUs **182** and **184** of the control device **180.**

In the example of FIG. **8****,** the control device **180** controls the drive device **240** only based on the deviation of the position of the work vehicle **100** determined by the GNSS unit **110** from the target path. This control may be performed, additionally taking a deviation in azimuth into account. For example, if an azimuthal deviation that is a difference in angle between the orientation of the work vehicle **100** determined by the GNSS unit **110,** and the direction of the target path, exceeds a preset threshold, the control device **180** may change a control parameter (e.g., a steering angle) of the steering device of the drive device **240** based on the deviation.

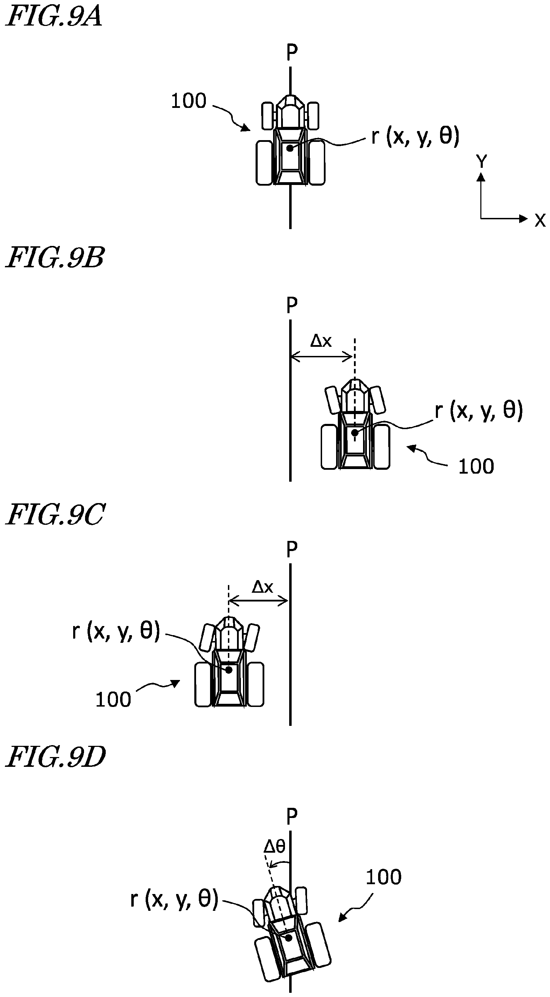

An example of the steering control performed by the control device **180** will be more specifically described below with reference to FIGS. **9A** to **9D****.**

FIG. **9A** is a diagram illustrating an example of the work vehicle **100** that travels along a target path **P.** FIG. **9B** is a diagram illustrating an example of the work vehicle **100** that is located at a position away from and to the right of the target path **P.** FIG. **9C** is a diagram illustrating an example of the work vehicle **100** that is located at a position away from and to the left of the target path **P.** FIG. **9D** is a diagram illustrating an example of the work vehicle **100** that faces in a direction tilted with respect to the target path **P.** In these figures, a pose indicating the position and orientation of the work vehicle **100** measured by the GNSS unit **110** is represented by r(x, y, θ). (x, y) is a coordinate point representing the position of a reference point of the work vehicle **100** in an XY coordinate system that is a two-dimensional coordinate system fixed to the earth. In the example of FIGS. **9A** to **9D****,** the reference point of the work vehicle **100** is located at the position where the GNSS antenna is provided on the cabin, but is not particularly limited. θ is an angle representing the measured orientation of the work vehicle **100.** In the illustrated example, the target path **P** is parallel to the Y axis, but in general, is not limited to this.

As illustrated in FIG. **9A****,** if the position and orientation of the work vehicle **100** do not deviate from the target path **P,** the control device **180** maintains the steering angle and speed of the work vehicle **100** without changing them.

As illustrated in FIG. **9B****,** if the position of the work vehicle **100** deviates to the right of the target path **P**, the control device **180** changes the steering angle of the work vehicle **100** so that the travel direction of the work vehicle **100** is tilted to the left and therefore the work vehicle **100** approaches the path **P.** At this time, the speed may also be changed in addition to the steering angle. The value of the steering angle may, for example, be adjusted according to the value of a positional deviation Δx.

As illustrated in FIG. **9C****,** if the position of the work vehicle **100** deviates to the left of the target path **P**, the control device **180** changes the steering angle of the work vehicle **100** so that the travel direction of the work vehicle **100** is tilted to the right and therefore the work vehicle **100** approaches the path **P.** At this time, the speed may also be changed in addition to the steering angle. The value of the steering angle may, for example, be adjusted according to the value of a positional deviation Δx.

As illustrated in FIG. **9D****,** if the position of the work vehicle **100** does not significantly deviate from the target path **P** and the orientation of the work vehicle **100** is different from the direction of the target path **P**, the control device **180** changes the steering angle so as to reduce an azimuthal deviation Δθ. Also in this case, the speed may be changed in addition to the steering angle. The value of the steering angle may, for example, be adjusted according to the value of each of the positional deviation Δx and the azimuthal deviation Δθ. For example, a variation in the steering angle according to the azimuthal deviation Δθ may be increased with a decrease in the absolute value of the positional deviation Δx. If the absolute value of the positional deviation Δx is great, the steering angle is changed much in order to cause the work vehicle **100** to return to the path **P**, and therefore, the absolute value of the azimuthal deviation Δθ is inevitably great. Conversely, if the absolute value of the positional deviation Δx is small, the azimuthal deviation Δθ needs to approach zero. Therefore, it is preferable to relatively increase the weight (i.e., a control gain) of the azimuthal deviation Δθ to determine the steering angle.

Control techniques such as PID control and MPC control (model prediction control) may be applied to the steering control and speed control of the work vehicle **100.** By applying these control techniques, control that causes the work vehicle **100** to approach the target path **P** can be smoothly performed.

It should be noted that if at least one obstacle sensor **130** detects an obstacle during traveling, the control device **180** stops the work vehicle **100.** At this time, the control device **180** may cause a buzzer **220** to make a warning sound, or may transmit a warning signal to the remote device **400.** If it is possible to avoid an obstacle, the control device **180** may control the drive device **240** so as to avoid the obstacle.

The work vehicle **100** according to this embodiment of the present disclosure can perform automatic traveling outside fields as well as inside fields. Outside fields, the control device **180** can detect an object located at a relatively distant position from the work vehicle **100** (e.g., another vehicle, a pedestrian, etc.) based on data output from the camera **120** or the LiDAR sensor **140.** The control device **180** generates a local path such that the detected object can be avoided, and performs speed control and steering control along the local path. Thus, automatic traveling can be carried out on a road outside fields.

As described above, the work vehicle **100** according to this embodiment of the present disclosure can automatically travel inside and outside fields in an unmanned manner. FIG. **10** is a diagram schematically illustrating an example of a situation in which a plurality of work vehicles **100** are automatically traveling in a field **70** and on a road **76** outside fields **70.** The storage device **170** stores an environmental map of an area including a plurality of fields and roads around the fields, and a target path. The environmental map and the target path may be generated by the management device **600** or the ECU **185.** When the work vehicle **100** travels on a road, the work vehicle **100** travels along the target path while sensing surroundings thereof using sensing devices such as the camera **120** and the LiDAR sensor **140,** with the implement **300** raised. During traveling, the control device **180** sequentially generates local paths and causes the work vehicle **100** to travel along the local paths. This allows the work vehicle **100** to automatically travel while avoiding obstacles. During traveling, the target path may be changed, depending on a situation. Thus, in this embodiment of the present disclosure, the control device can generates a target path for automatic traveling in fields and on roads around fields. In the automatic traveling mode, the control device **180** causes the work vehicle **100** to automatically travel in an automatic traveling area specified by a field and a road for which a target path has been generated.

### 2-2. Remote maneuver

Next, operations related to remote maneuver of the work vehicle **100** will be described.

When the work vehicle **100** is automatically traveling, the user can remotely monitor and maneuver the work vehicle **100** using the remote device **400.** When the work vehicle **100** is automatically traveling, the control device **180** transmits an image (e.g., moving images) captured by at least one camera **120** mounted on the work vehicle **100** to the remote device **400** through the communication device **190.** The remote device **400** displays that image on the display **430.** The user can check a situation around the work vehicle **100** and start remotely-operated traveling if necessary while viewing the displayed image.

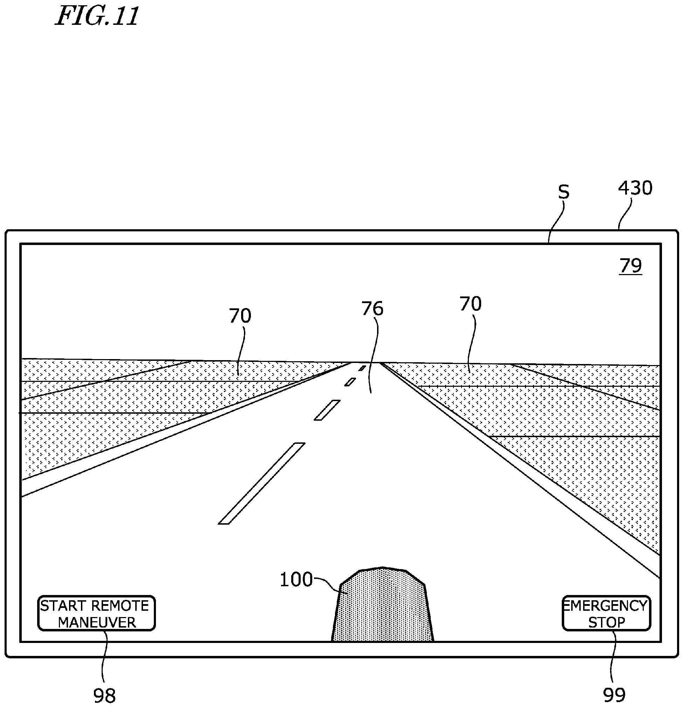

FIG. **11** is a diagram illustrating an example of an image displayed on the display **430** of the remote device **400.** The image illustrated in FIG. **11** shows a field **70,** a road **76,** a sky **79,** and a front portion of the work vehicle **100.** The image is captured by the camera **120** that captures an image of an area in front of the work vehicle **100.** In addition to the camera **120** that captures an image of an area in front of the work vehicle **100,** an image captured by a camera **120** that captures an image of an area behind or to the right or left of the camera **120** may, for example, be displayed on the display **430.** The display **430** displays moving images having a frame rate of, for example, at least 3 fps (typically, 30 fps or 60 fps, etc.). It should be noted that a plurality of images captured by a plurality of cameras **120** may be displayed on a plurality of displays. For example, as illustrated in FIG. **1B****,** a plurality of videos may be displayed on a plurality of displays **430** in the remote monitoring center. In that case, a user (i.e., an operator) who is a monitorer can check details of a situation around the work vehicle **100** while viewing a plurality of videos displayed on a plurality of displays **430.** In addition to images captured by the camera **120,** a map of an area including the work vehicle **100** may be displayed on a display.

In the example illustrated in FIG. **11****,** the displayed image includes a button (remote maneuver start button) **98** to instruct to start remote maneuver, and a button (emergency stop button) **99** to cause the work vehicle **100** to stop immediately. The user can cause transition from the automatic traveling mode to the remote operation mode by touching or clicking the remote maneuver start button **98.** The user can also immediately stop the work vehicle **100** by touching or clicking the emergency stop button **99.**

When the remote maneuver start button **98** is pressed, remote maneuver is enabled. For example, in the example of FIG. **1B****,** the operator can remotely maneuver the work vehicle **100** using the remote maneuver machine **500.** The control device **180** causes the work vehicle **100** to perform an instructed operation in response to the user's operation.

In the above example, an image (hereinafter also referred to as a "camera image") captured by the camera **120** mounted on the work vehicle **100** is displayed on the display **430** of the remote device **400.** In addition to the camera image, an image based on point cloud data obtained by the LiDAR sensor **140** and other sensing data may, for example, be displayed on the display **430.** An image based on the point cloud data indicates the distribution of objects located around the work vehicle **100,** and therefore, may be used for monitoring as with camera images. The operator can recognize a situation around the work vehicle **100** based on a camera image or an image based on the point cloud data. In the following description, moving images or a video based on image data generated by the camera **120** and point cloud data generated by the LiDAR sensor **140** are in some cases referred to as "time-series images."

### 3. Video display system

A video display system according to an embodiment of the present disclosure includes an image capture device, a screen, and a control device. The image capture device is mounted on an agricultural machine (work vehicle **100**) to which an implement **300** is connected, and generates data of time-series images by capturing images of an area in the travel direction of the work vehicle **100.** The control device displays, on the screen, a video based on the data of the time-series images. The control device is configured to (1) when the implement is connected to the work vehicle **100** on the opposite side from the travel direction, display, on the screen, a superimposed video in which a path for the implement is superimposed on a video, and (2) display, on the screen, a superimposed video in which an image showing a work trace after ground work in the travel direction, which is predicted during traveling of the work vehicle **100** with the implement connected thereto is superimposed on a video. For example, a camera **120** provided at a front portion of the work vehicle **100** may serve as the image capture device. The display **430** of the remote device **400** of FIG. **1B** or the touchscreen of the operation terminal **200** of FIG. **5** may serve as the screen of the video display system. The control device **180** of the work vehicle **100,** the processor **460** of the remote device **400,** or the processor of the operation terminal **200** may serve as the control device of the video display system. The control device of the video display system is hereinafter simply referred to as a "control device."

In this embodiment of the present disclosure, the implement **300** is connected to a rear portion of the work vehicle **100.** A video captured by the image capture device indicates an area in front of the agricultural machine. It should be noted that the implement **300** may be connected to a front portion of the work vehicle **100.** In that case, a video captured by the image capture device indicates an area behind the work vehicle **100.** The control device can display, on the screen, a video showing an area in front of the work vehicle **100.** The control device displays, on the screen, a superimposed video in which a path and/or a work trace after ground work of the implement **300** are superimposed on the video.

The video display system according to this embodiment of the present disclosure can display, on the screen, a superimposed video in which an image showing at least one of a path and a work trace after ground work of the implement **300** located behind the work vehicle **100,** in the travel direction of the work vehicle **100,** is superimposed on a video showing an area in front of the work vehicle **100.** As a result, for example, the ease of remote maneuver can be improved. Different implements **300** may have different heights and widths. Even in that case, for example, the operator who operates the remote operation device can easily recognize, from the superimposed video, a future state in the travel direction of the work vehicle **100,** such as a path, a work trace after ground work, or the like of the implement. Therefore, when remotely operating the work vehicle **100** inside or outside fields, the operator can, for example, easily change a target path for the work vehicle **100,** start and stop the operation of the implement **300,** stop traveling of the work vehicle **100,** and the like.

### 3-1. First implementation example

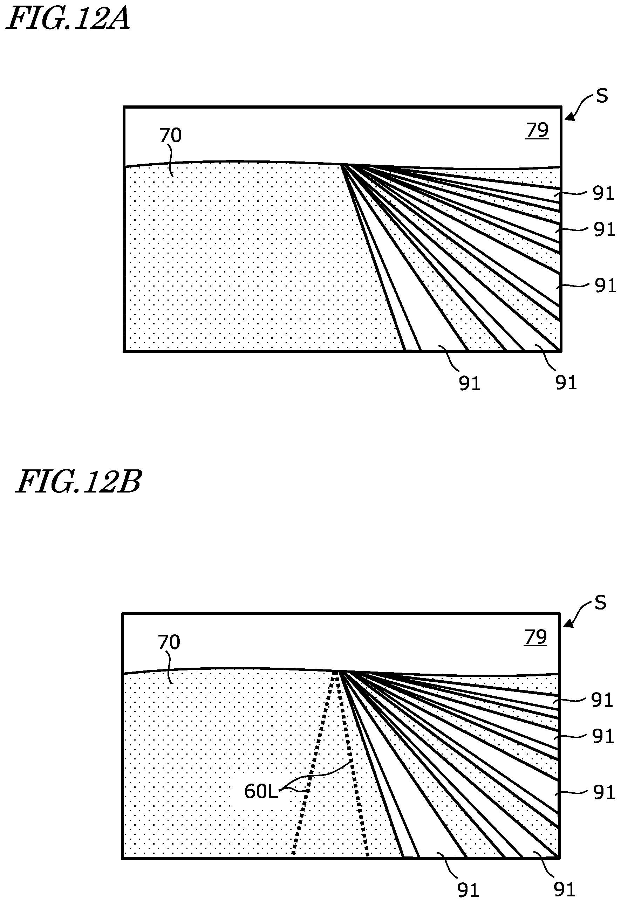

A method for displaying a superimposed video according to a first implementation example will be described with reference to FIGS. **12A** to **21****.**

FIG. **12A** is a diagram schematically illustrating an example of a video showing an area in front of the work vehicle **100,** which is displayed on a screen **S.** FIG. **12B** is a diagram schematically illustrating an example of a superimposed video in which a path for the implement **300** in the travel direction of the work vehicle **100** is superimposed on a video. The implement **300** may perform at least one of types of ground work including hilling, tillage, crop planting, and crop reaping. FIGS. **12A** and **12B** each illustrate a situation in which the implement **300** is performing hilling in a field **70.** As illustrated in FIG. **12A****,** a conventional video shows a plurality of hills **91** for which work has been done and that extend in the travel direction of the work vehicle **100,** and it is natural that no hills **91** have not yet been formed in the ground of the travel direction.

In the first implementation example, the control device displays, on the screen **S,** a superimposed video in which a path for the implement **300** when the implement **300** is connected to the work vehicle **100** on the opposite side from the travel direction is superimposed on a video. As a result, in the video displayed on the screen **S,** an indication showing the path for the implement **300** can be viewed on the ground in the travel direction of the work vehicle **100.** In the example of FIG. **12B****,** the path for the implement **300** is represented by an imaginary dotted line indication **60.**

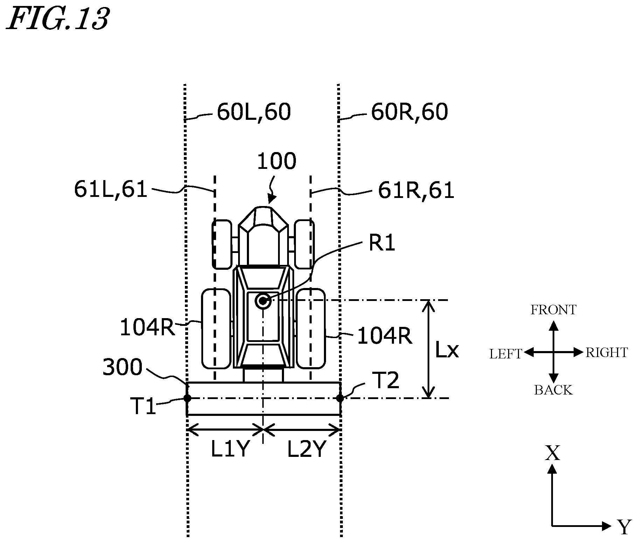

FIG. **13** is a diagram schematically illustrating a positional relationship between a reference point **R1** in a local coordinate system of the work vehicle **100** and the positions of both end portions of the implement **300.** The local coordinate system, which is moved together with the work vehicle **100** and the implement **300,** is also referred to as a mobile body coordinate system. The reference point **R1** in the local coordinate system may be set at any position of the work vehicle **100.** In the example of FIG. **13****,** the reference point **R1** is set at a position where the camera **120** is arranged.

In this embodiment of the present disclosure, when the work vehicle **100** and the implement **300,** which are connected to each other, travel straight on a flat ground, the front-back direction of the vehicle is the X direction and the left-right direction of the vehicle is the Y direction in the local coordinate system. The direction from back to front is the +X direction and the direction from left to right is the +Y direction. Concerning the geometry of a device, ISO 11783 specifies that "the X axis is specified as positive in the normal driving direction," and "the Y axis is specified as positive to the right side of the device relative to the normal driving direction." The X direction and the Y direction in the local coordinate system may be defined based on the definition of the device geometry. The unit of coordinate values of the local coordinate system is not particularly limited, and may, for example, be millimeter. Even in a local coordinate system for the work vehicle **100** alone and a local coordinate system for the implement **300** alone, the X and Y directions and the unit of coordinate values are defined in a manner similar to that described above.

The control device obtains implement information about the implement **300,** and pose information about the current pose of the work vehicle **100.** The implement information includes size information of an implement. The implement information may, for example, further include specific information (e.g., model number) that can be used to identify the model of the implement **300.** The size information of the implement **300** may include the sizes in the X and Y directions of the entirety of the implement **300** of FIG. **13****,** and height information of the implement **300.** The implement information may be previously stored in a storage device of the implement **300.** In this embodiment of the present disclosure, the pose information indicates a pose that is a set of the position and orientation of the work vehicle **100** as measured using the GNSS unit **110,** and is represented by the above r(x, y, θ). The work vehicle information includes size information of the work vehicle **100.** The work vehicle information may, for example, further include specific information (e.g., model number) that can be used to identify the model of the work vehicle **100.** The size information of the work vehicle **100** may include the sizes in the X and Y directions of the entirety of the work vehicle **100** of FIG. **13****.**

As described above, the work vehicle **100** and the implement **300** can, for example, communicate with each other in accordance with the ISOBUS standard. By thus communicating with the implement **300,** the control device may obtain the implement information including the size of the implement **300.** Alternatively, the control device may obtain the implement information including the size of the implement **300,** which is input by the user through an input device. The user may, for example, input the implement information through the input device **420** of the remote device **400.**

As illustrated in FIG. **13****,** positions **T1** and **T2** of both end portions in the width direction of the implement **300** are located a length **LX** behind the reference point **R1.** The position **T1** is located a length **L1Y** to the left of the reference point **R1,** and the position **T2** is located a length **L2Y** to the right of the reference point **R1.** In the first implementation example, the control device calculates the length **LX** based on the sizes in the X direction of the work vehicle **100** and the implement **300,** and the lengths **L1Y** and **L2Y** based on the size in the Y direction of the implement **300.** Thus, the control device can calculate the coordinates of the positions **T1** and **T2** with respect to the reference point **R1** in the local coordinate system. The control device further converts the coordinate points of the positions **T1** and **T2** in the local coordinate system into those in a geographic coordinate system based on the pose information. The coordinate points of the positions **T1** and **T2** in the geographic coordinate system are each represented by a latitude and a longitude, for example.

An example of determination of a positional relationship between the reference point of a work vehicle and the position of a specific portion of an implement in a local coordinate system is specifically described in Japanese Laid-Open Patent Publication No. 2022-101030, filed by the same applicant as the present application. The entire contents of Japanese Laid-Open Patent Publication No. 2022-101030 are hereby incorporated by reference.

The r(θ) of the pose information means the azimuth angle of the travel direction of the work vehicle **100.** The r(x, y) of the pose information is, for example, represented by a latitude and a longitude. The azimuth angle is, for example, represented by a clockwise angle with reference to true north. In the first implementation example, the control device predicts a path for the implement **300** based on the implement information and the pose information. For example, the control device calculates an imaginary straight line passing through the coordinate points in the geographic coordinate system of the positions **T1** and **T2** of both end portions of the implement **300** calculated based on the implement information and the pose information, and extending in the direction of an azimuth angle calculated based on the current pose information, and determines this straight line as a future path for the implement **300** in the travel direction of the work vehicle **100.**

The control device may predict a path for the implement **300** including a path for at least one of both end portions of the implement **300.** In the example of FIG. **13****,** the control device predicts paths for both end portions of the implement **300.** The control device calculates an imaginary straight line **60L** passing through the coordinate point of the position **T1** in the geographic coordinate system and extending in the true north direction (θ = 0), and an imaginary straight line **60R** passing through the coordinate point of the position **T2** in the geographic coordinate system and extending in the true north direction (θ = 0). The control device determines the straight lines **60L** and **60R** as paths for both a left end portion and a right end portion of the implement **300.** In FIG. **13****,** the straight lines **60L** and **60R** are indicated by a dotted line. It should be noted that the indication of paths for the implement **300** is not limited to lines.

In the first implementation example, the control device coordinate-converts a point cloud specifying an imaginary straight line in the geographic coordinate system indicating a path for the implement **300** into the positions of pixels in an image coordinate system. Specifically, the control device converts the coordinate points of a point cloud specifying an imaginary straight line in the geographic coordinate system into those in the local coordinate system using external parameters of a camera for converting the geographic coordinate system into the local coordinate system. The control device further converts the coordinate points of a point cloud specifying an imaginary straight line in the local coordinate system into those in the image coordinate system using internal parameters of a camera for converting the local coordinate system into the image coordinate system. As a result, a three-dimensional point cloud in the geographic coordinate system can be transferred to a two-dimensional plane in the image coordinate system. Thus, the control device can generate a superimposed video in which the straight lines **60L** and **60R** indicating paths for both a left end portion and a right end portion, respectively, of the implement **300** are superimposed on a video. The control device can, for example, generate a superimposed video using a real-time rendering (or real-time CG) technique.

In the above example, the control device converts the coordinate points of the positions **T1** and **T2** of both end portions of the implement **300** in the local coordinate system into those in the geographic coordinate system, and displays, on the screen **S,** paths calculated based on the positions **T1** and **T2** in the geographic coordinate system. It should be noted that generation of a superimposed video is not limited to this example. For example, the control device may set straight lines **60L** and **60R** (see FIG. **13**) passing through both end portions of the implement **300** in the local coordinate system, and overlays the straight lines **60L** and **60R** thus set on a video obtained by the image capture device. The local coordinate system and the image coordinate system may be previously associated with each other. The control device may convert the coordinate points of the straight lines **60L** and **60R** in the local coordinate system into those in the image coordinate system according to that association, thus generating a superimposed video in which the straight lines **60L** and **60R** are superimposed on a video.

The control device may predict paths for the wheels **104** of the work vehicle **100** based on the pose information when the work vehicle **100** is traveling, and display, on the screen **S,** a superimposed video the paths for the wheels of the work vehicle **100** are further superimposed on a video. The work vehicle information may include information about the coordinate points in the local coordinate system of the positions of the four wheels of the work vehicle **100.** In the first implementation example, the control device calculates imaginary straight lines **61L** and **61R** passing through the coordinate points in the local coordinate system of a pair of rear wheels **104R** and extending in the direction of an azimuth angle calculated from the current pose information as in the case of a path for the implement **300.** The control device determines the straight lines **61L** and **61R** as paths for the pair of rear wheels **104R.** FIG. **13** represents the straight lines **61L** and **61R** by a dashed line. It should be noted that the indication of paths for the wheels **104** is not limited to lines.

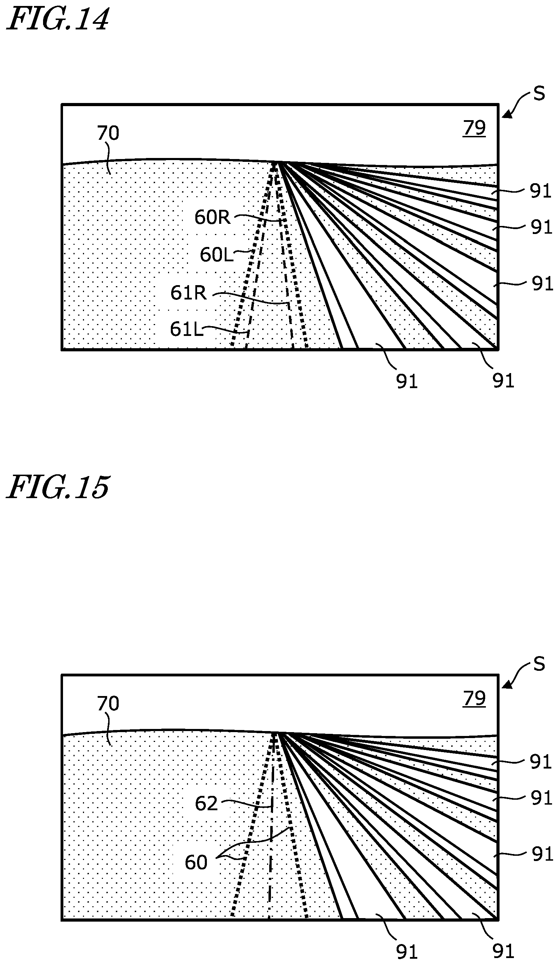

FIG. **14** is a diagram schematically illustrating an example of a superimposed video in which paths for the implement **300** and paths for the pair of rear wheels **104R** are superimposed on a video. The control device can generate a superimposed video in which a line indication of paths for the pair of rear wheels **104R** is further superimposed on a video, by converting the coordinate points of the straight lines **61L** and **61R** in the geographic coordinate system into those in the image coordinate system.

In another example in which paths for the implement **300** are indicated, the control device **180** of the work vehicle **100** may estimate paths for wheels in the image coordinate system, in a video, based on the work vehicle information, the pose information, and the like. Since a positional relationship between the wheels and the camera **120** (the reference point **R1**) of the work vehicle **100** is known, the control device can estimate paths for both end portions of the implement **300** from paths for the pair of rear wheels **104R** in the image coordinate system based on that positional relationship.

FIG. **15** is a diagram schematically illustrating an example of a superimposed video in which paths for the implement **300** and a target line along a target path are superimposed on a video. The control device may display, on the screen **S,** a superimposed video in which a target line **62** along a target path that is set so as to cause the work vehicle **100** to automatically travel is further superimposed on a video. In the example of FIG. **15****,** the target line **62** is represented by a dash-dot line. It should be noted that the indication of the target line **62** is not limited to lines. With such a superimposed video, it may be easier to visually recognize a deviation of paths for the implement **300** from the target line.

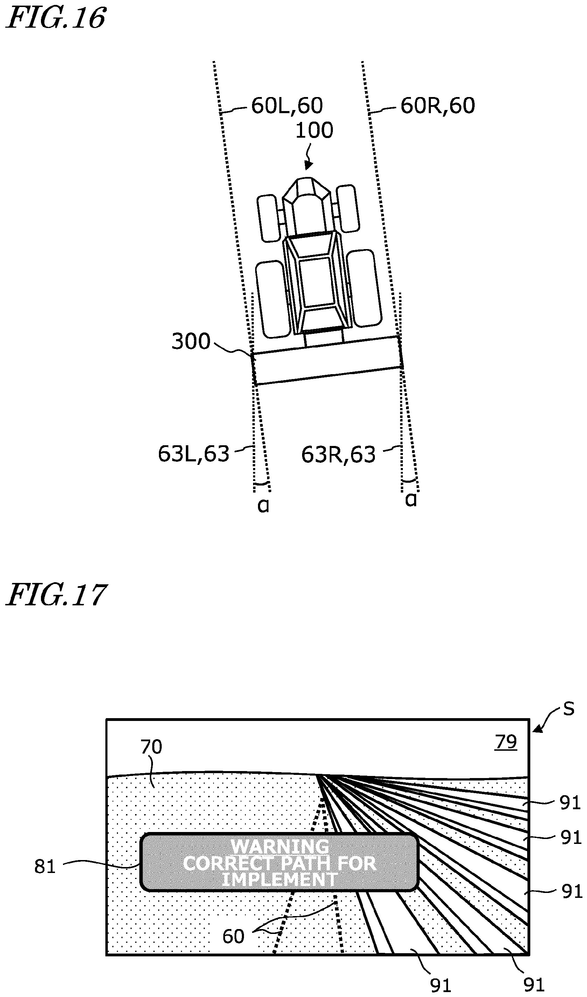

FIG. **16** is a schematic diagram for describing the amount of a deviation of predicted paths for the implement **300** from reference paths. In FIG. **16****,** predicted paths and reference paths for the implement **300** are represented by straight lines **60** and **63,** respectively. The control device can estimate the amounts of deviations of predicted paths **60** for the implement **300** from reference paths, based on the predicted paths for the implement **300,** and the reference paths predicted from the past tracks of the implement **300.** For example, the control device calculates regression straight lines **63** from waypoints specifying past tracks of the implement **300** by the least squares method. The control device may determine the regression straight lines **63** as reference paths. The deviation amount may be represented by an angle α between the straight line **60** and the regression straight line **63.**

The control device may provide different indications on the screen **S,** depending on whether or not the deviation amount is less than a threshold. When the deviation amount is less than the threshold, the control device may, for example, notify the operator that the implement **300** is properly automatically traveling along a target path, by highlighting the lines **60** indicating the paths for the implement **300.**

FIG. **17** is a diagram schematically illustrating an example of a superimposed video including a warning indication **81** that is displayed on the screen **S** when the deviation amount is not less than the threshold. When the deviation amount is not less than the threshold, the control device may display, on the screen **S,** a superimposed video including a warning indication **81** warning that a predicted track for the implement **300** deviates from past tracks. The warning indication **81** may be displayed on the topmost plane of a video. In the example illustrated in FIG. **17****,** straight lines **60** indicating paths for the implement **300** touch an adjacent hill **91.** Such a superimposed video can, for example, prompt the operator to change the target path, so that the implement **300** can be proactively prevented from touching the adjacent hill.

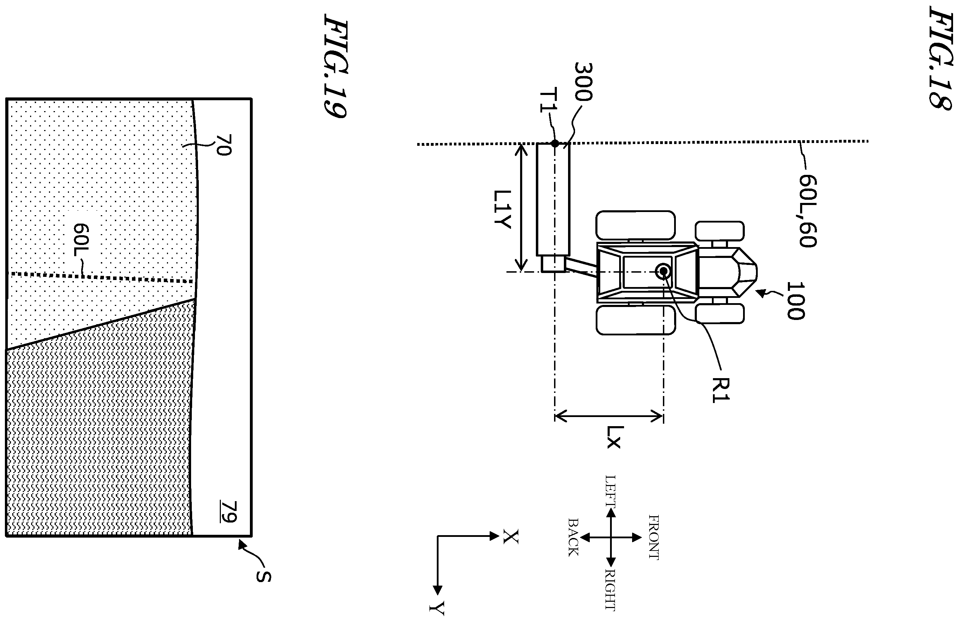

FIG. **18** is a diagram schematically illustrating a positional relationship between the reference point **R1** in the local coordinate system of a work vehicle **100,** and the position of one side portion of an implement **300** installed off-center. An example of the off-center implement is a plow for tillage, overturning, and plowing in conjunction with fertilization, or a mower. In the example of FIG. **18****,** the implement **300** is offset to the left of the middle of the work vehicle **100.** As described above with reference to FIG. **13****,** the control device calculates the coordinate point in the geographic coordinate system of the position of the side portion **T1** of the off-center implement **300** based on lengths **Lx** and **L1Y.** The control device calculates an imaginary straight line **60L** passing through the coordinate point of the position **T1** in the geographic coordinate system and extending in the true north direction (θ = 0). The control device determines the straight line **60L** as a path for the left side portion of the implement **300.**

FIG. **19** is a diagram schematically illustrating an example of a superimposed video in which a path for the off-center implement **300** is superimposed on a video. FIG. **19** illustrates a situation in which mowing is being performed by the off-center implement **300.** The control device may display, on the screen **S,** a superimposed video in which a straight line **60L** indicating a path for a left side portion of the off-center implement **300** is superimposed on a video.

The video display system according to this embodiment of the present disclosure may include a sensing device that obtains sensing data indicating a distribution of objects on the ground around the work vehicle **100.** The sensing device may be a sensing device **250** of the work vehicle **100.** If there is an object on the ground in the travel direction of the work vehicle **100,** the control device can estimate the size of the object based on sensing data output from the sensing device. The control device may display, on the screen **S,** a superimposed video including a warning indication **82** warning that the implement **300** is likely to hit the object, depending on the result of comparison between the size of the implement **300** and the size of the object.

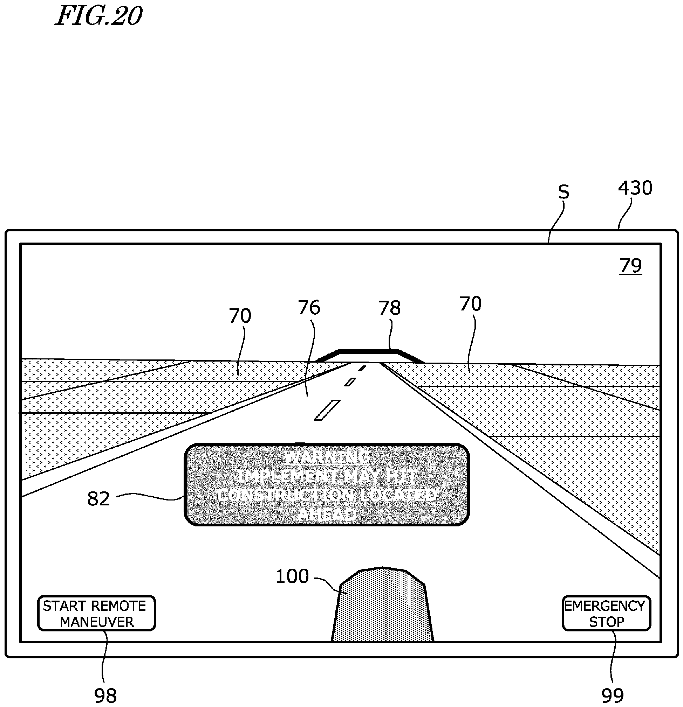

FIG. **20** is a diagram schematically illustrating an example of a video showing that there is a footbridge **78** grade-separated from a road **76** outside fields in the travel direction of a work vehicle **100** traveling on the road **76.** The work vehicle **100** may travel outside fields with an implement **300** raised. Therefore, the implement **300** may hit an object located on the ground in the travel direction of the work vehicle **100,** depending on the type of the implement **300.** For example, the control device can estimate the height of the footbridge **78** based on sensing data output from a sensing device. The control device can also estimate the height of the uppermost portion of the implement **300** with reference to the ground based on the size in the height direction of the implement **300.** If the estimated height of the uppermost portion is greater than the estimated height of the footbridge **78,** the control device displays, on the screen **S,** a superimposed video including the warning indication **82.** By displaying a warning indication, it is possible to proactively avoid hitting an object on the ground.

The video display system according to this embodiment of the present disclosure may include a light source that is controlled by the control device, and an optical system that receives light output from the light source and forms a virtual image in front of a screen. In other words, the video display system may include a HUD. A HUD that displays information in the human visual field is used to display information on the windshield of a vehicle to assist in driving.

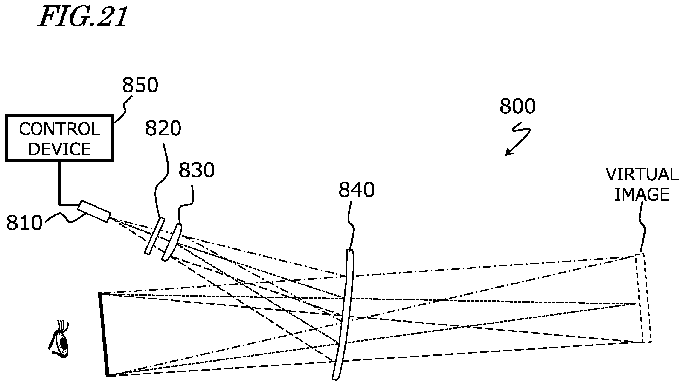

FIG. **21** is a schematic diagram illustrating an example configuration of a HUD unit. A type of HUD using a virtual image optical system will be described below. It should be noted that the configuration of the HUD unit is not limited to the example of FIG. **21****.**

A HUD unit **800** includes a light source **810,** a transparent screen **820,** a field lens **830,** and a combiner **840.** The optical system of the HUD unit **800** has the transparent screen **820,** the field lens **830,** and the combiner **840,** and in addition, a MEME mirror, a movable lens, and the like. The HUD unit **800** is, for example, attached to the ceiling surface of the roof of the cabin of a work vehicle.

A light beam emitted from the light source **810** is focused by the transparent screen **820** to form a real image. The transparent screen **820** serves as a secondary light source, and emits the focused light beam toward the combiner **840** so as to form a generally rectangular illuminated region. The combiner **840** forms a virtual image based on the received light beam. As a result, the operator can view a video together with the outside world through the combiner **840.**

The light source **810** is a device that renders a video. The light source **810** is configured to emit display light toward the transparent screen **820.** For example, as a rendering method, a digital light processing (DLP) method and a method using a laser projector are known. The light source **810** may have a laser projector, and a MEME mirror that performs scanning using a light beam emitted from the laser projector. An example of the laser projector is an RGB laser projector.

The transparent screen **820** has a microlens array on a light-receiving surface. The transparent screen **820** has the function of spreading an incident beam. The field lens **830** is arranged between the transparent screen **820** and the combiner **840,** and in the vicinity of the transparent screen **820.** The field lens **830** includes, for example, a convex lens, and changes the travel direction of a light beam emitted from the transparent screen **820.** By using the field lens **830,** the efficiency of use of light can be further improved. It should be noted that the field lens **830** is not essential.

The combiner **840** typically includes, for example, a one-way mirror, and may include a hologram element or the like. The combiner **840** reflects a diverging light beam from the transparent screen **820** to form a virtual image of light. The combiner **840** has the function of enlarging a video formed on the transparent screen **820** and displaying the video at a distance, and overlaying the video on the outside world. As a result, the operator can view a video together with the outside world through the combiner **840.** In other words, the operator can view a video displayed on the screen together with the outside world. The size of the virtual image or a position at which the virtual image is formed can be changed, depending on the curvature of the combiner **840.** In the HUD unit **800,** the combiner **840** serves as a screen of the video display system.

An example of the control device **850** is a processor. The control device **850** serves as a control device of the video display system.

Thus, the technique according to the present disclosure is also applicable to displaying of a video by the HUD unit.

### 3-2. Second implementation example

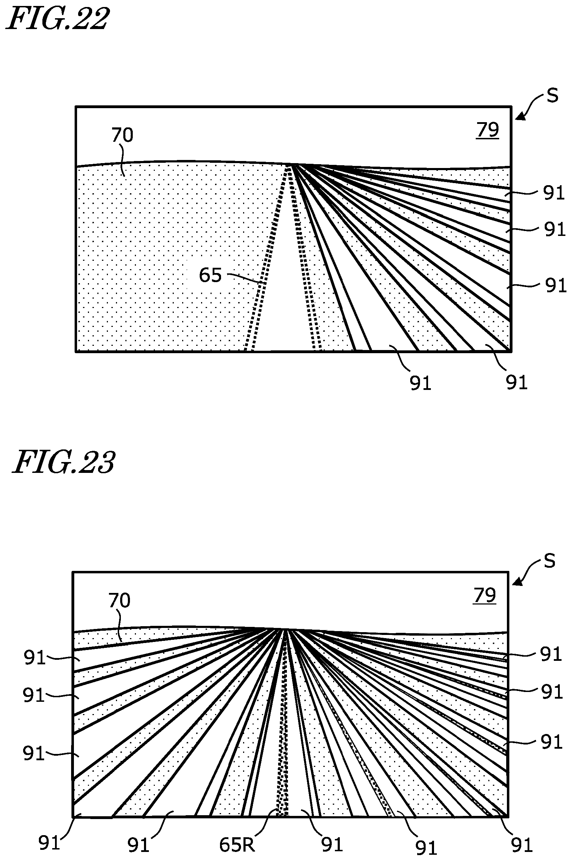

A method for displaying a superimposed video according to a second implementation example will be described with reference to FIGS. **22** to **28****.**

FIG. **22** is a diagram schematically illustrating an example of a superimposed video in which a work trace after ground work in the travel direction are superimposed on a video. FIG. **22** illustrates a situation in which an implement **300** performs hilling work in a field **70.** In the second implementation example, the control device displays, on the screen **S,** a superimposed video in which an image showing a work trace after ground work in the travel direction that is predicted when the work vehicle **100** to which the implement **300** is connected is traveling is superimposed on a video. As a result, in the video displayed on the screen **S,** an indication showing a work trace after ground work in the travel direction of the work vehicle **100** can be viewed. In the illustrated example, the shape of an outer edge of a hill indicating an imaginary work trace is represented by a line (dotted line) **65.** By displaying an imaginary work trace in a video showing a front area, an operator who operates a remote operation device can recognize, before actual work, a work trace to be achieved by the implement **300** as if the work vehicle **100** were viewed from behind, for example. For example, if a predicted work trace as it is after several seconds is virtually displayed on the screen **S,** the operator can easily recognize a future state such as a work trace after ground work from the superimposed video. This can contribute to an improvement in the operability of remote operation.

The work trace after ground work displayed on the screen **S** includes a worked state imitating work to be performed by the implement **300.** For example, in the case of hilling, the work trace is represented by a pattern or image imitating a state in which hilling has been done. In the case of tillage, the work trace is represented by a pattern or image imitating a state in which tillage has been done. In the case of transplantation, the work trace is represented by a pattern or image imitating a state in which transplantation has been done.

FIG. **23** is a diagram schematically illustrating another example of a superimposed video in which work traces after ground work in the travel direction are superimposed on a video. FIG. **23** illustrates a situation in which the implement **300** plants seedlings along a hill **91.** In the illustrated example, an imaginary crop row **65R** is formed as a work trace after ground work on the hill **91** in the travel direction of the work vehicle **100.** In other words, the control device generates a superimposed video in which the imaginary crop row **65R** formed on the hill **91** is superimposed on a video.

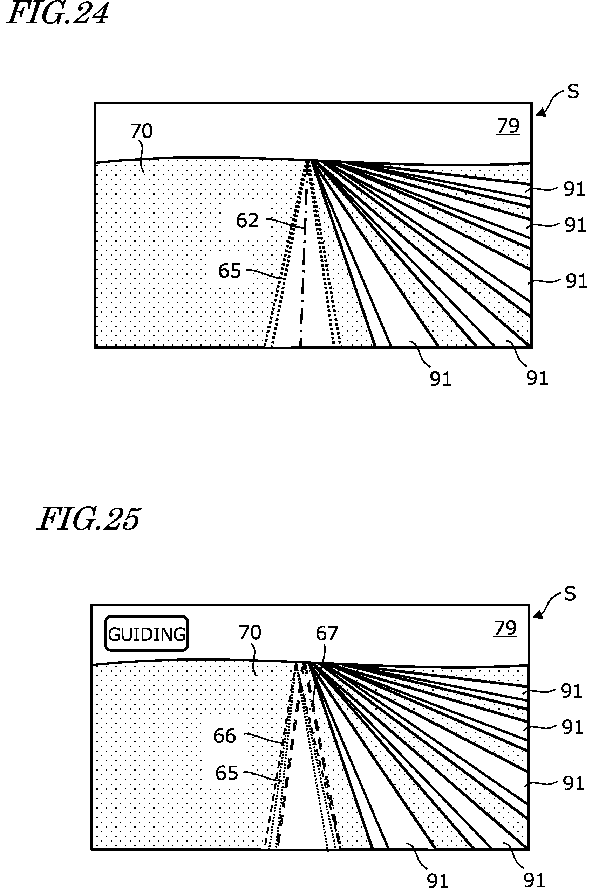

FIG. **24** is a diagram schematically illustrating a superimposed video in which a work trace after ground work and a target line **62** are superimposed on a video. As in the first implementation example, the control device may display, on the screen **S,** a superimposed video in which a target line **62** along a target path is further superimposed on a video. In the video of this illustrated example, the target line **62** is displayed on a hill indicating a work trace **65.**

As in the first implementation example, the control device of the second implementation example predicts a work trace based on implement information relating to the implement **300,** and pose information relating to the current pose of the work vehicle **100.** For example, the control device predicts a path for the implement **300** including a predicted path for at least one of both end portions of the implement **300.** The implement information may include information about the size of an implement, and information about the type of the implement. As described in the first implementation example, the control device predicts a path for the implement **300** based on information about the size of the implement **300** and the pose information when the work vehicle **100** is traveling. The control device may display, on the screen **S,** a superimposed video in which a predicted path for the implement **300** is further superimposed on a video.

The control device further predicts a work trace based on information about the predicted path for the implement **300** and the type of the implement **300.** For example, when the implement **300** performs ground work that is tillage, information about the type of the implement included in the implement information includes information about a tillage depth, tillage width, and the like. In the example of FIG. **22****,** the implement **300** is a rotary machine for hilling, and the control device may, for example, perform real-time rendering based on work information about hilling, information about tillage depth and tillage width, and information about a predicted path for the implement **300** (coordinate points in the geographic coordinate system), to render a three-dimensional, imaginary hill image showing a work trace after hilling work. In addition, in the example of FIG. **23****,** the implement **300** is a vegetable transplanter, and the control device may, for example, perform real-time rendering based on crop plating work information including the type of a seedling, and information about a predicted path for the implement **300,** to render a three-dimensional, imaginary crop row image showing a work trace after crop planting work. The control device may determine color information, texture, and the like required for displaying an image from the type of ground work, the type of a seedling, or the like.

The data required for rendering a pattern or image imitating a state of a work trace may, for example, be previously stored as a database in association with the type of work in the storage device **650** of the management device **600.** For example, the control device determines the type of work with reference to information about the type of an implement and the width information of the implement. The control device reads out, from the database, data required for imitating a state of a work trace associated with the determined work type. The control device can further reference information about a tillage depth, tillage width, and the like, and based on the read data, render a pattern or image imitating a state of a work trace on the screen **S.**

The control device may display, on the screen **S,** a superimposed video in which a guidance line for work is further superimposed on a video. The guidance line may be set based on a target line. In this example, a path for the implement **300** is displayed by a work prediction line. The control device may display, on the screen **S,** a superimposed video including a guidance indication that guides the user, indicating that the work prediction line should coincide with the guidance line.

FIG. **25** is a diagram schematically illustrating an example of a superimposed video including a guidance indication that guides the user, indicating that the work prediction line should coincide with the guidance line. In FIG. **25****,** a work trace **65,** a work prediction line **66,** and a guidance line **67** are represented by a dotted line, a dashed line, and a thick dashed line, respectively. The automatic traveling mode of the work vehicle **100** includes a guidance mode in which the user is guided and prompted to cause the work prediction line to coincide with the guidance line, for example. FIG. **25** illustrates a situation in which the work vehicle **100** is automatically traveling in the guidance mode.

The control device may, for example, estimate the amount of a deviation of the work prediction line **66** from the guidance line **67** in a manner similar to that described with reference to FIG. **16****.** If the deviation amount is less than a threshold, the work prediction line **66** coincides with the guidance line **67.** If the deviation amount is not less than the threshold, the work prediction line **66** does not coincide with the guidance line **67.** During the time when the work prediction line **66** coincides with the guidance line **67,** the control device may, for example, highlight the line indication by increasing the thickness of the work prediction line **66,** or changing the color of the work prediction line **66.** During the time when the work prediction line **66** does not coincide with the guidance line **67,** the control device may, for example, cause the work prediction line **66** to flicker. By thus highlighting the work prediction line **66,** depending on the situation, the operator can be guided.

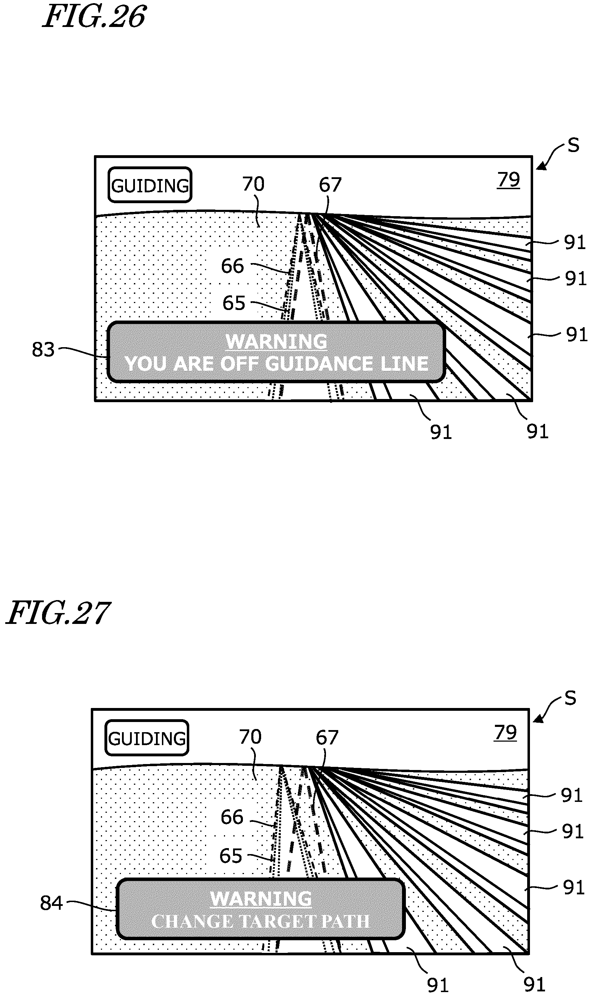

FIG. **26** is a diagram schematically illustrating an example of a superimposed video including a warning indication warning that the work prediction line **66** does not coincide with the guidance line **67.** During the time when the work prediction line **66** does not coincide with the guidance line **67,** the control device may display, on the screen **S,** a superimposed video including a warning indication **83** warning that the work prediction line does not coincide with the guidance line. Alternatively, during the time when the work prediction line **66** does not coincide with the guidance line **67,** the buzzer **220** of the work vehicle **100** may, for example, serve as a warning device warning that the work prediction line **66** does not coincide with the guidance line **67.** Examples of the warning device are not limited to buzzers, and may be an optical device such as a light-emitting diode or a vibration device such as a vibrator.

FIG. **27** is a diagram schematically illustrating an example of a superimposed video including a guidance indication that prompts the user to change a target path. If the deviation amount is not less than the threshold, i.e., the work prediction line **66** does not coincide with the guidance line **67,** the control device may display, on the screen **S,** a superimposed video including a guidance indication **84** that prompts the user to change a target path along which the work vehicle **100** is to automatically travel.

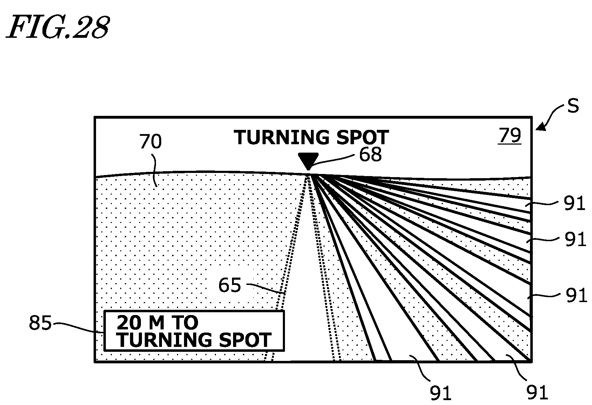

FIG. **28** is a diagram schematically illustrating an example of a superimposed video including an indication of a turning site located in the travel direction of the work vehicle **100.** The control device may predict a spot in the travel direction of the work vehicle **100** where the implement **300** is to be started, stopped, or raised or lowered, based on data of time-series images, and display, on the screen **S,** a superimposed video including an indication of that site. The superimposed video of FIG. **28** includes a turning site indication **68.** For example, in the vicinity of a turning site, there is generally a ridge on the opposite side of a headland of a field from a planted area. The control device can, for example, detect a ridge from time-series images by an object detection technique employing machine learning or deep learning. The control device displays the indication **68** at the position of an object specified in an image.

As illustrated in FIG. **28****,** the control device may display, on the screen **S,** a superimposed video including an indication **85** of distance information indicating a distance between the current position of the work vehicle **100** and a turning site. The control device may determine a distance to a turning site by performing image analysis on time-series images, or based on sensing data output from a sensing device. The superimposed video is not limited to turning sites, and may include an indication of any site where the implement **300** is to be started, stopped, or raised or lowered.

The configurations and operations of the above embodiments are merely illustrative. The present disclosure is not limited to the above embodiments. For example, the above various embodiments may be combined, as appropriate, to provide other embodiments.

Although in the above embodiments an agricultural machine performs automated driving, an agricultural machine may not have the automated driving function. The techniques according to the present disclosure are widely applicable to agricultural machines that can be remotely operated.

The system or video display system that controls automatic traveling and/or remotely-operated traveling according to the above embodiments can be subsequently added to an agricultural machine that does not have such functions, as an add-on. Such a system may be manufactured and sold separately from agricultural machines. A computer program for use in such a system may also be manufactured and sold separately from agricultural machines. The computer program may, for example, be stored and provided in a non-transitory computer-readable storage medium. The computer program may also be downloaded and provided through telecommunication lines (e.g., the Internet).

As described above, the present disclosure includes a video display system and a work vehicle that are described in the following Items.

### [Item A1]

A video display system comprising:
an image capture device attached to a work vehicle to which an implement is connected and configured to generate data of time-series images by performing imaging in a travel direction of the work vehicle;
a screen; and
a control device configured to display, on the screen, a video based on the data of the time-series images, wherein
the control device is configured to, when the implement is connected to the work vehicle on an opposite side of the work vehicle from the travel direction, display, on the screen, a superimposed video in which a path for the implement is superimposed on the video.

### [Item A2]

The video display system according to item A1, wherein:
the implement is connected to a rear portion of the work vehicle,
the video shows an area in front of the work vehicle,
the control device is configured to display the video on the screen, and
the control device is configured to display, on the screen, the superimposed video in which the path for the implement is superimposed on the video.

### [Item A3]

The video display system according to item A1 or A2, wherein the control device is configured to predict the path for the implement based on implement information relating to the implement and pose information relating to a current pose of the work vehicle.

### [Item A4]

The video display system according to item A2 or A3, wherein the control device is configured to:
predict a path for a wheel of the work vehicle based on the pose information when the work vehicle is traveling, and
display, on the screen, the superimposed video in which the path for the wheel of the work vehicle is further superimposed on the video.

### [Item A5]

The video display system according to item A3 or A4, wherein:
the work vehicle is capable of automatically traveling, and
the control device is configured to display, on the screen, the superimposed video in which a target line along a target path to be set to cause the work vehicle to automatically travel is further superimposed on the video.

### [Item A6]

The video display system according to any of items A3 to A5, wherein the control device is configured to:
estimate a deviation amount of a predicted path for the implement from a reference path predicted from past tracks of the implement, based on the predicted path and the reference path, and
display different indications on the screen, depending on whether or not the deviation amount is less than a threshold.

### [Item A7]

The video display system according to item A6, wherein the control device is configured to, when the deviation amount is not less than the threshold, display, on the screen, the superimposed video including a warning indication warning that the predicted path for the implement deviates from the past tracks.

### [Item A8]

The video display system according to any of items A3 to A7, wherein the control device is configured to predict the path for the implement including a predicted path for at least one of both end portions of the implement located in a width direction of the implement.

### [Item A9]

The video display system according to any of items A3 to A8, wherein the control device is configured to obtain the implement information including a size of the implement by communicating with the implement.

### [Item A10]

The video display system according to any of items A3 to A8, wherein the control device is configured to obtain the implement information including a size of the implement input by a user through an input device.

### [Item A11]

The video display system according to item A9 or A10, comprising:
a sensing device configured to obtain sensing data indicating a distribution of objects on the ground around the work vehicle,
wherein the control device is configured to:
estimate a size of an object existing on the ground in the travel direction of the work vehicle based on the sensing data output from the sensing device, and
display, on the screen, the superimposed video including a warning indication warning that the implement is likely to hit the object on the ground, depending on a result of comparison between the size of the implement and the size of the object on the ground.

### [Item A12]

The video display system according to any of items A1 to A11, comprising:
a light source to be controlled by the control device; and
an optical system to receive light emitted from the light source and form a virtual image in front of the screen.

### [Item A13]

An agricultural machine comprising:
a work vehicle;
an implement; and
the video display system according to any of items A1 to A12.

### [Item B1]

A video display system comprising:
an image capture device attached to a work vehicle to which an implement is connected and configured to generate data of time-series images by performing imaging in a travel direction of the work vehicle;
a screen; and
a control device configured to display, on the screen, a video based on the data of the time-series images, wherein the control device is configured to display, on the screen, a superimposed video in which an image showing a work trace after ground work in the travel direction predicted when the work vehicle with the implement connected thereto is traveling is superimposed on the video.

### [Item B2]

The video display system according to item B1, wherein the control device is configured to predict the work trace based on implement information relating to the implement and pose information relating to a current pose of the work vehicle.

### [Item B3]]

The video display system according to item B2, wherein:
the implement information includes information relating to a type and a size of the implement, and
the control device is configured to:
   predict a path for the implement based on the information relating to the size of the implement and the pose information when the work vehicle is traveling, and
   predict the work trace based on the path for the implement and the information relating to the type of the implement.

### [Item B4]

The video display system according to item B3, wherein the control device is configured to display, on the screen, the superimposed video in which the predicted path for the implement is further superimposed on the video.

### [Item B5]

The video display system according to item B4, wherein:
the path for the implement is represented by a work prediction line, and
the control device is configured to:
   display, on the screen, the superimposed video in which a guidance line for work is further superimposed on the video, and
   display, on the screen, the superimposed video including a guidance indication that guides a user, indicating that the work prediction line should coincide with the guidance line.

### [Item B6]

The video display system according to item B5, wherein the control device is configured to, when the work prediction line does not coincide with the guidance line, display, on the screen, the superimposed video including a warning indication warning that the work prediction line does not coincide with the guidance line.

### [Item B7]

The video display system according to item B5, comprising:
a warning device configured to, when the work prediction line does not coincide with the guidance line, warn that the work prediction line does not coincide with the guidance line.

### [Item B8]

The video display system according to any of items B5 to B7, wherein
the work vehicle is capable of automatically traveling, and
the control device is configured to:
   estimate a deviation amount of the work prediction line from the guidance line, and
   when the deviation amount is not less than a threshold, display, on the screen, the superimposed video including a guidance indication that prompts a user to change a target path to be set for causing the work vehicle to automatically travel.

### [Item B9]

The video display system according to item B8, wherein the control device is configured to display, on the screen, the superimposed video in which a target line along the target path is superimposed on the video.

### [Item B10]

The video display system according to item B9, wherein the guidance line is set based on the target line.

### [Item B11]

The video display system according to any of items B3 to B10, wherein the control device is configured to predict the path for the implement including a predicted path for at least one of both end portions of the implement located in a width direction of the implement.

### [Item B12]

The video display system according to any of items B2 to B11, wherein the control device is configured to predict a spot where the implement is to be started, stopped, or raised or lowered in the travel direction of the work vehicle, based on the data of the time-series images, and display, on the screen, the superimposed video including an indication of the spot.

### [Item B13]

The video display system according to item B12, wherein the control device is configured to display, on the screen, the superimposed video including distance information indicating a distance from a current position of the work vehicle to the spot.

### [Item B14]

The video display system according to any of items B2 to B13, wherein the control device is configured to obtain the implement information by communicating with the implement.

### [Item B15]

The video display system according to any of items B2 to B13, wherein the control device is configured to obtain the implement information input by a user through an input device.

### [Item B16]

The video display system according to any of items B1 to B15, wherein:
the implement is configured to perform at least one of types of ground work including hilling, tillage, crop planting, and crop reaping, and
the control device is configured to generate the image showing the work trace after the ground work.

### [Item B17]

The video display system according to any of items B1 to B16, comprising:
a light source configured to be controlled by the control device; and
an optical system configured to receive light emitted from the light source and form a virtual image in front of the screen.

### [Item B18]

An agricultural machine comprising:
a work vehicle;
an implement; and
the video display system according to any of items B1 to B17.

### [Item B19]

The agricultural machine according to item B18, wherein the implement is connected to a rear portion of the work vehicle.

### INDUSTRIAL APPLICABILITY

The technique according to the present disclosure is applicable to, for example, a video display system for agricultural machines that perform automatic traveling such as tractors, harvesters, rice transplanters, vehicles for crop management, vegetable transplanters, mowers, seeders, spreaders, and mobile robots for agriculture.

### REFERENCE SIGNS LIST

- **50**: GNSS satellite
- **60, 60L, 60R, 61, 61L, 61R, 63, 63L, 63R**: Line indication
- **60A**: Reference station
- **62**: Target line
- **65**: Work trace
- **65R**: Crop row
- **66**: Work prediction line
- **67**: Guidance line
- **68**: Indication
- **70**: Field
- **72**: Work area
- **74**: Headland
- **76**: Road
- **78**: Footbridge
- **79**: Sky
- **80**: Network
- **81** to **83**: Warning indication
- **84**: Guidance indication
- **85**: Indication
- **91**: Hill
- **98**: Remote operation start button
- **99**: Emergency stop button
- **100**: Work vehicle
- **101**: Vehicle body
- **102**: Prime mover
- **103**: Transmission
- **104**: Wheel
- **104F**: Front wheel
- **104R**: Rear wheel
- **105**: Cabin
- **106**: Steering device
- **107**: Driver's seat
- **108**: Connecting device
- **110**: GNSS unit
- **111**: GNSS receiver
- **112**: RTK receiver
- **116**: Processing circuit
- **120**: Camera
- **130**: Obstacle sensor
- **140**: LiDAR sensor
- **150**: Sensors
- **152**: Steering wheel sensor
- **154**: Steering angle sensor
- **156**: Axle sensor
- **160**: Travel control system
- **170**: Storage device
- **180**: Control device
- **181** to **186**: ECU
- **190**: Communication device
- **200**: Operation terminal
- **210**: Operation switches
- **220**: Buzzer
- **240**: Drive device
- **250**: Sensing device
- **300**: Implement
- **340**: Drive device
- **380**: Control device
- **390**: Communication device
- **400**: Remote device
- **420**: Input device
- **430**: Display device (display)
- **450**: Storage device
- **460**: Processor
- **470**: ROM
- **480**: RAM
- **490**: Communication device
- **500**: Remote operation device
- **600**: Management device
- **650**: Storage device
- **660**: Processor
- **670**: ROM
- **680**: RAM
- **690**: Communication device
- **800**: HUD unit
- **810**: Light source
- **820**: Transparent screen
- **830**: Field lens
- **840**: Combiner
- **850**: Control device

## Claims

1. A video display system comprising:
an image capture device attached to a work vehicle to which an implement is connected and configured to generate data of time-series images by performing imaging in a travel direction of the work vehicle;
a screen; and
a control device to display, on the screen, a video based on the data of the time-series images,
wherein
the control device is configured to, when the implement is connected to the work vehicle on an opposite side of the work vehicle from the travel direction, display, on the screen, a superimposed video in which a path for the implement is superimposed on the video.

2. The video display system according to claim 1, wherein
the implement is connected to a rear portion of the work vehicle,
the video shows an area in front of the work vehicle,
the control device is configured to display the video on the screen, and
the control device is configured to display, on the screen, the superimposed video in which the path for the implement is superimposed on the video.

3. The video display system according to claim 1 or 2, wherein the control device is configured to predict the path for the implement based on implement information relating to the implement and pose information relating to a current pose of the work vehicle.

4. The video display system according to claim 2, wherein the control device is configured to:
predict a path for a wheel of the work vehicle based on the pose information when the work vehicle is traveling, and
display, on the screen, the superimposed video in which the path for the wheel of the work vehicle is further superimposed on the video.

5. The video display system according to claim 3, wherein:
the work vehicle is capable of automatically traveling, and
the control device is configured to display, on the screen, the superimposed video in which a target line along a target path to be set to cause the work vehicle to automatically travel is further superimposed on the video.

6. The video display system according to claim 3, wherein the control device is configured to:
estimate a deviation amount of a predicted path for the implement from a reference path predicted from past tracks of the implement, based on the predicted path and the reference path, and
display different indications on the screen, depending on whether or not the deviation amount is less than a threshold.

7. The video display system according to claim 6, wherein the control device is configured to, when the deviation amount is not less than the threshold, display, on the screen, the superimposed video including a warning indication warning that the predicted path for the implement deviates from the past tracks.

8. The video display system according to claims 3, wherein the control device is configured to predict the path for the implement including a predicted path for at least one of both end portions of the implement located in a width direction of the implement.

9. The video display system according to claim 3, wherein the control device is configured to obtain the implement information including a size of the implement by communicating with the implement.

10. The video display system according to claim 3, wherein the control device is configured to obtain the implement information including a size of the implement input by a user through an input device.

11. The video display system according to claim 9, comprising:
a sensing device configured to obtain sensing data indicating a distribution of objects on the ground around the work vehicle,
wherein
the control device is configured to:
estimate a size of an object existing on the ground in the travel direction of the work vehicle based on the sensing data output from the sensing device, and
display, on the screen, the superimposed video including a warning indication warning that the implement is likely to hit the object on the ground, depending on a result of comparison between the size of the implement and the size of the object on the ground.

12. The video display system according to claim 1 or 2, comprising:
a light source to be controlled by the control device; and
an optical system to receive light emitted from the light source and form a virtual image in front of the screen.

13. An agricultural machine comprising:
a work vehicle;
an implement; and
the video display system according to claim 1 or 2.

14. A video display system comprising:
an image capture device attached to a work vehicle to which an implement is connected and configured to generate data of time-series images by performing imaging in a travel direction of the work vehicle;
a screen; and
a control device to display, on the screen, a video based on the data of the time-series images,
wherein the control device is configured to display, on the screen, a superimposed video in which an image showing a work trace after ground work in the travel direction predicted when the work vehicle with the implement connected thereto is traveling is superimposed on the video.

15. The video display system according to claim 14, wherein the control device is configured to predict the work trace based on implement information relating to the implement and pose information relating to a current pose of the work vehicle.

16. The video display system according to claim 15, wherein:
the implement information includes information relating to a type and a size of the implement, and
the control device is configured to:
predict a path for the implement based on the information relating to the size of the implement and the pose information when the work vehicle is traveling, and
predict the work trace based on the path for the implement and the information relating to the type of the implement.

17. The video display system according to claim 16, wherein the control device is configured to display, on the screen, the superimposed video in which the predicted path for the implement is further superimposed on the video.

18. The video display system according to claim 17, wherein:
the path for the implement is represented by a work prediction line, and
the control device is configured to:
display, on the screen, the superimposed video in which a guidance line for work is further superimposed on the video, and
display, on the screen, the superimposed video including a guidance indication that guides a user, indicating that the work prediction line should coincide with the guidance line.

19. The video display system according to claim 18, wherein the control device is configured to, when the work prediction line does not coincide with the guidance line, display, on the screen, the superimposed video including a warning indication warning that the work prediction line does not coincide with the guidance line.

20. The video display system according to claim 18, comprising:
a warning device to, when the work prediction line does not coincide with the guidance line, warn that the work prediction line does not coincide with the guidance line.

21. The video display system according to any of claims 18 to 20, wherein:
the work vehicle is capable of automatically traveling, and
the control device is configured to:
estimate a deviation amount of the work prediction line from the guidance line, and
when the deviation amount is not less than a threshold, display, on the screen, the superimposed video including a guidance indication that prompts a user to change a target path to be set for causing the work vehicle to automatically travel.

22. The video display system according to claim 21, wherein the control device is configured to display, on the screen, the superimposed video in which a target line along the target path is superimposed on the video.

23. The video display system according to claim 22, wherein the guidance line is set based on the target line.

24. The video display system according to any of claims 16 to 20, wherein the control device is configured to predict the path for the implement including a predicted path for at least one of both end portions of the implement located in a width direction of the implement.

25. The video display system according to any of claims 15 to 20, wherein the control device is configured to predict a spot where the implement is to be started, stopped, or raised or lowered in the travel direction of the work vehicle, based on the data of the time-series images, and display, on the screen, the superimposed video including an indication of the spot.

26. The video display system according to claim 25, wherein the control device is configured to display, on the screen, the superimposed video including distance information indicating a distance from a current position of the work vehicle to the spot.

27. The video display system according to any of claims 15 to 20, wherein the control device is configured to obtain the implement information by communicating with the implement.

28. The video display system according to any of claims 15 to 20, wherein the control device is configured to obtain the implement information input by a user through an input device.

29. The video display system according to any of claims 14 to 20, wherein:
the implement is configured to perform at least one of types of ground work including hilling, tillage, crop planting, and crop reaping, and
the control device is configured to generate the image showing the work trace after the ground work.

30. The video display system according to any of claims 14 to 20, comprising:
a light source configured to be controlled by the control device; and
an optical system configured to receive light emitted from the light source and form a virtual image in front of the screen.

31. An agricultural machine comprising:
a work vehicle;
an implement; and
the video display system according to any of claims 14 to 20.

32. The agricultural machine according to claim 31, wherein the implement is connected to a rear portion of the work vehicle.
